# EUROPÄISCHE PATENTSCHRIFT

(11) **EP 3 049 236 B1**
(45) Veröffentlichungstag und Bekanntmachung des Hinweises auf die Patenterteilung: **20.12.2017**
(21) Anmeldenummer: 14776614.1
(22) Anmeldetag: 23.09.2014
(51) Int. Cl.: B29C 70/34, B29C 70/86, B60J 5/00, B29C 70/08, B29C 44/14, B29C 44/12

(54) **MEHRSCHICHTIGES STRUKTURBAUTEIL, VERFAHREN ZU DESSEN HERSTELLUNG UND VERWENDUNG**
MULTILAYER STRUCTURAL COMPONENT, METHOD FOR ITS PRODUCTION AND APPLICATION
COMPOSANT STRUCTURÉ MULTICOUCHES ET SON PROCÉDÉ DE FABRICATION ET D'UTILISATION

(30) Priorität: 27.09.2013 EP 13186386; 30.09.2013 EP 13186695
(43) Veröffentlichungstag der Anmeldung: 03.08.2016
(73) Patentinhaber: Covestro Deutschland AG, 51373 Leverkusen (DE)
(72) Erfinder: MÖLLER, Philipp, 50679 Köln (DE); GROSSER, Ulrich, 51515 Kürten (DE); THULKE, Thomas, 50733 Köln (DE); ALBACH, Rolf, 51061 Köln (DE); BRAMBRINK, Roland, 42799 Leichlingen (DE); BREUER, Bernd, 51379 Leverkusen (DE)
(74) Vertreter: Levpat
(86) Internationale Anmeldenummer: PCT/EP2014/070172
(87) Internationale Veröffentlichungsnummer: WO 2015/044099

(56) Entgegenhaltungen:
- EP-A1- 1 508 429
- WO-A1-2012/114226
- DE-B3-102011 106 151
- US-B1- 6 331 028

## Beschreibung

Die Erfindung betrifft mehrschichtige Strukturbauteile, insbesondere zur Verwendung als Leichtbauteil.

Im Automobilbau, aber auch in anderen Industriebereichen, werden seit einiger Zeit vermehrt Leichtbauteile gesetzt, um dadurch Vorteile beispielsweise in Bezug auf den Kraftstoffverbrauch zu erreichen. Insbesondere im Automobilbau besteht ein Bedarf an Strukturbauteilen, die einerseits ein geringes Gewicht aufweisen, andererseits aber die beim Automobilbau erforderlichen Sicherheits- und Stabilitätsanforderungen, beispielweise in Bezug auf die Belastbarkeit, erfüllen können. Zur Erhöhung des Fahrkomforts von Automobilen besteht insbesondere auch ein Bedürfnis nach Strukturbauteilen, die aufgrund ihrer Dämmeigenschaften oder ihres Eigenfrequenzspektrums einen geringen Geräuschpegel im Fahrzeuginnenraum begünstigen. Weiterhin werden insbesondere von der Automobilindustrie hohe Anforderungen insbesondere an sichtbare Strukturbauteile hinsichtlich ihrer optischen Eigenschaften und Oberflächenqualität gestellt, so dass die Strukturbauteile beispielsweise eine gleichmäßige Lackschicht ermöglichen.

Aus dem Stand der Technik sind verschiedene Varianten von Leichtbauteilen bekannt. Hierzu zählen insbesondere Bauteile aus einer Kombination von metallischen Blechen mit Trägerstrukturen, beispielsweise aus Kunststoffmaterialien, welche ganz oder teilweise mittels Klebetechnik miteinander verbunden sind. Weiterhin sind auch Spritzgussbauteile mit einer metallischen Trägerstruktur, reine Spritzgussbauteile und duroplastische FVK-Teile (RTM, SMC, BMC), ggf. mit Glasfaser- oder Kohlefaserverstärkung, bekannt.

Unter "Resin Transfer Moulding" (RTM) - oft auch als Spritzpressen bezeichnet - wird ein Verfahren zur Herstellung von faserverstärkten Bauteilen verstanden, bei dem Fasermatten in ein Werkzeug eingelegt und danach mit einem flüssigem Harz-Härter-Gemisch unter Druck umgossen werden. Das Harz reagiert unter Wärmezufuhr aus, wodurch ein fester Körper entsteht.

"Sheet Moulding Compound" (SMC) bezeichnet aus dem Stand der Technik bekannte plattenförmige teigartige Pressmassen aus duroplastischen Reaktionsharzen und Glasfasern zur Herstellung von Faser-Kunststoff-Verbunden. In den SMC liegen alle nötigen Komponenten vollständig vorgemischt, fertig zur Verarbeitung, vor. In der Regel werden Polyester- oder Vinylesterharze verwendet. Die Verstärkungsfasern liegen in Matten-, seltener in Gewebeform vor, wobei deren typische Faserlänge 25-50 mm beträgt.

"Bulk Moulding Compound" (BMC) ist ein bekanntes Faser-Matrix-Halbzeug. Es besteht zumeist aus Kurz-Glasfasern und einem Polyester- oder Vinylesterharz, wobei auch andere Verstärkungsfasern oder Harzsysteme möglich sind. Naturfasern, als preiswerte Alternative zu Glasfasern, finden zunehmend Verbreitung. BMC wird als formlose Masse in Beuteln oder anderen Gebinden geliefert.

Trotz dieser bekannten Leichtbauteile besteht jedoch weiterhin ein Bedarf an verbesserten Leichtbauteilen, da die bekannten Systeme entweder unzureichende Materialeigenschaften, insbesondere in Bezug auf die Stabilität, die Steifigkeit etc., aufweisen oder sich nur in recht aufwändigen Verfahren herstellen oder einsetzen lassen, da sie beispielsweise die separate Herstellung von Metall- und Kunststoffkomponenten erfordern, die dann bei der Montage des Fahrzeugs in einem separaten Arbeitsschritt miteinander verbunden werden müssen, beispielsweise indem ein Kunststoffblech mit einer Trägerstruktur aus Metall verklebt wird.

Bei den bisher aus dem Stand der Technik bekannten Leichtbauteilen stellt sich weiterhin auch eine Kombination mit krafteinleitenden Funktionselementen (Krafteinleitungselemente) als problematisch dar. So wurden bisher beispielsweise Träger- bzw. Rahmenstrukturen aus Metall zur Aufnahme der auftretenden Lasten mit Außenteilen, wie zum Beispiel Metallblechen oder Kunststoffblechen, zum Zwecke der Verkleidung kombiniert. Derartige Strukturen sind im Automobilbereich als sogenannte Spaceframe-Bauweise bekannt. Bei dem weiterhin bekannten Konzept der selbsttragenden Strukturen nehmen hingegen die äußeren Karosserieteile die auftretenden Lasten auf. Krafteinleitungselemente zum Abführen der auftretenden Lasten werden bei bisherigen Lösungsansätzen grundsätzlich mit lasttragenden Rahmenstrukturen verbunden, insbesondere durch Schweißen, Schrauben oder Nieten, wodurch ein erhöhter Arbeitsaufwand entsteht. US-B-6331028 offenbart die Merkmale des Oberbegriffs des Anspruchs 1. Es besteht daher insbesondere auch ein Bedarf an Leichtbauteilen, in die Krafteinleitungselemente integrierbar sind, ohne dass die vorgenannten Befestigungsmethoden zur Anwendung kommen müssen, und so eine vereinfachte Anbringung von Krafteinleitungselementen ermöglicht wird. Ausgehend von diesem Stand der Technik liegt der vorliegenden Erfindung die Aufgabe zu Grunde, ein Strukturbauteil für den Leichtbau zur Verfügung zu stellen, das einerseits gute Materialeigenschaften wie Steifigkeit und Belastbarkeit bei geringem Gewicht aufweist und andererseits auf relativ einfache Weise herstellbar und einsetzbar ist, insbesondere als fertiges Bauteil zum unmittelbaren Einsatz in Kraftfahrzeugen.

Diese Aufgabe wird erfindungsgemäß zumindest teilweise durch ein mehrschichtiges Strukturbauteil gelöst, das eine erste und zweite Faserverbundschicht und eine dazwischen angeordnete Schaumschicht aus aufgeschäumtem Kunststoff umfasst, wobei die erste und die zweite Faserverbundschicht jeweils mindestens eine Faserlage aus einem Fasermaterial aufweisen, die in eine auf einem thermoplastischen Kunststoff basierende Matrix eingebettet ist. Eine solche Faserverbundschicht mit mindestens einer Faserlage aus einem Fasermaterial, die in eine auf einem thermoplastischen Kunststoff basierende Matrix eingebettet ist, wird auch als "Composite Sheet" bezeichnet. Die auf einem Kunststoff basierende Matrix umfasst vorzugsweise mindestens eine erste und eine zweite Kunststoffschicht, zwischen denen die Faserlage angeordnet ist. Die Kunststoffschichten können beispielsweise jeweils durch mindestens eine Lage Kunststofffolie hergestellt worden sein. Erfindungsgemäße Strukturbauteile weisen außerdem eine Verankerungsstruktur mit einer Basis zur Anbindung an ein Krafteinleitungselement und mit einer Verzweigungsstruktur auf, wobei die Verzweigungsstruktur mindestens drei sich von der Basis in verschiedene Richtungen erstreckende Zweige umfasst.

Im Rahmen der Erfindung wurde erkannt, dass durch die Kombination zweier Composite-Sheets mit einer dazwischen angeordneten Schaumschicht aus aufgeschäumtem Kunststoff ein Strukturbauteil zur Verfügung gestellt werden kann, das sehr gute mechanische Eigenschaften, insbesondere in Bezug auf die Steifigkeit und Stabilität, bei gleichzeitig geringem Gewicht aufweist und demnach insbesondere als Leichtbauteil für den Automobilbau geeignet ist. Weiterhin werden diese Eigenschaften in einem integralen Bauteil zur Verfügung gestellt, welches sich direkt am vorgesehenen Einsatzort, z.B. in einem Kraftfahrzeug, verbauen lässt. Insbesondere erfordern die Strukturbauteile keine zusätzlichen Rahmenstrukturen, da sie selbst bereits eine hohe Eigensteifigkeit aufweisen und daher hohe Kräfte aufnehmen können, ohne sich übermäßig zu verformen.

Mit dem beschriebenen Strukturbauteil können darüber hinaus auch gute akustische Dämmeigenschaften erreicht werden und das Eigenfrequenzspektrum an die jeweiligen Anforderungen angepasst werden. Insbesondere kann durch den mehrschichtigen, sandwichartigen Aufbau des Strukturbauteils eine Umlenkung der Schallwellen und durch die verschiedenen Dichten der Faserverbundschichten und der Schaumschicht eine bessere Schalldämmung erreicht werden als beispielsweise bei Aluminium- oder Stahlblechen. Während derartige Aluminium- oder Stahlbleche zusätzlich gedämmt werden müssen, beispielsweise durch das zusätzliche Hinterspritzen mit PU-Schaum, wird die erforderliche Dämmung bei dem beschriebenen Strukturbauteil bereits erreicht, so dass zusätzliche Materialien und Arbeitsschritte zur Dämmung eingespart werden können.

Die erste und die zweite Faserverbundschicht können gleichartig oder verschiedenartig aufgebaut sein, zum Beispiel in Bezug auf die Faserart, die Anzahl der Faserlagen und die Art des thermoplastischen Kunststoffs. Durch das gleichartige Ausbilden der ersten und zweiten Faserverbundschicht kann ein Verziehen des Strukturbauteils verhindert werden. Andererseits kann mit verschiedenartigen ersten und zweiten Faserverbundschichten ein Strukturbauteil mit an eine bestimmte Anwendung angepassten Eigenschaften hergestellt werden.

Die zuvor beschriebene Aufgabe wird erfindungsgemäß weiterhin zumindest teilweise gelöst durch ein Verfahren zur Herstellung eines Strukturbauteils, insbesondere eines zuvor beschriebenen Strukturbauteils, bei dem ein erstes und ein zweites Faserverbundblech bereitgestellt werden, wobei das erste und das zweite Faserverbundblech jeweils mindestens eine Faserlage aus einem Fasermaterial aufweisen, die in eine auf einem thermoplastischen Kunststoff basierende Matrix eingebettet ist, bei denen das erste Faserverbundblech zu einem ersten Faserverbundhalbzeug und das zweite Faserverbundblech zu einem zweiten Faserverbundhalbzeug thermogeformt werden, bei dem das erste und das zweite Faserverbundhalbzeug so in einem Schäumwerkzeug angeordnet werden, dass zwischen dem ersten und dem zweiten Faserverbundhalbzeug ein Hohlraum ausgebildet wird, und bei dem der Hohlraum durch Einspritzen eines aufschäumenden Kunststoffs verschäumt wird. Die Verankerungsstruktur wird so in einer in das erste oder das zweite Faserverbundhalbzeug eingebrachte Aufnahme angeordnet, dass die Verankerungsstruktur in den Hohlraum hineinragt und dort beim Verschäumen des Hohlraums vom aufgeschäumten Kunststoff eingebettet wird.

Unter dem Thermoformen eines Faserverbundblechs wird verstanden, dass das Faserverbundblech zunächst auf eine Temperatur oberhalb der Erweichungstemperatur des thermoplastischen Kunststoffs erwärmt und dann, insbesondere unter Verwendung eines Umformwerkzeugs, umgeformt wird. Das Umformwerkzeug kann zu diesem Zweck ebenfalls temperiert sein, beispielsweise bei einer Temperatur im Bereich der Erweichungstemperaturen des thermoplastischen Kunststoffs, beispielsweise in einem Bereich von +/- 20 °C um die Erweichungstemperatur. Das erste und das zweite Faserverbundhalbzeug können dieselbe Form oder verschiedene Formen aufweisen. Vorzugsweise wird das Faserverbundblech auf eine Temperatur von mindestens 80 °C, bevorzugt mindestens 90 °C, insbesondere mindestens 100 °C erwärmt. Auf diese Weise wird verhindert, dass das Faserverbundblech nach dem Erwärmen zu schnell erstarrt und dann nicht mehr richtig verformt werden kann oder es ggf. sogar zur lokalen Beschädigung der Kunststoffmatrix kommt. Bei der Verwendung von Polycarbonaten für die Matrix wird das Faserverbundblech vorzugsweise auf eine Temperatur im Bereich von 100 °C erwärmt.

Das Verbundelement kann auf verschiedene Weisen hergestellt werden, die zum Beispiel auch von der Herstellung von Instrumententafeln oder Dachhimmeln bekannt sind. Das dazu notwendige bevorzugt temperierte Werkzeug weist eine erste, im Wesentlichen der Form des ersten Faserverbundhalbzeugs entsprechende Werkzeughälfte und eine zweite, im Wesentlichen der Form des zweiten Faserverbundhalbzeugs entsprechende Werkzeughälfte auf, an denen das jeweilige Faserverbundhalbzeug fixiert wird.

In einem Verfahren werden die Faserverbundhalbzeuge ganz oder teilweise mit Klebstoff versehen, eine Lage thermoformbaren, bevorzugt duromeren, Schaumstoffs wird eingelegt, das Werkzeug wird geschlossen und bei geeigneter Temperatur verpresst.

In einem weiteren Verfahren wird eine Lage ganz oder teilweise mit Klebstoff versehenen thermoformbaren, bevorzugt duromeren, Schaumstoffs eingelegt, das Werkzeug wird geschlossen und bei geeigneter Temperatur verpresst.

In einem weiteren Verfahren wird ein aufschäumfähiger Kunststoff oder ein reaktionsfähiges Gemisch auf ein Faserverbundhalbzeug aufgetragen, das Werkzeug wird überwiegend geschlossen und das reaktionsfähige Gemisch schäumt zwischen den Faserverbundhalbzeugen auf, wobei bevorzugt das Werkzeug weiter geschlossen wird, wenn das aufschäumende Gemisch den nach Schließen des Werkzeugen verbliebenen Öffnungen nahe kommt und aus dem Werkzeug auszutreten droht. Es sind aber auch andere Methoden bekannt, um das Austreten von Schaumstoff zu verhindern, wie z. B. Labyrinthe und offenzellige Schaumstofffolien. Je nach Design des Fertigteils kann aber auch ein geringer Austrieb von Schaumstoff akzeptabel sein, wenn das vollständige Schließen des Werkzeuges zu kompliziert sein sollte oder zu einer unzureichenden Qualität des Fertigteils führte.

In einem weiteren Verfahren wird das Werkzeug mit den zwei Faserverbundhalbzzeugen zuerst weitgehend geschlossen, dann wird ein reaktionsfähiges Gemisch in den so gebildeten Hohlraum eingetragen und der aufschäumfähige Kunststoff bzw. das reaktionsfähige Gemisch schäumt zwischen den Faserverbundhalbzeugen auf, wobei bevorzugt das Werkzeug weiter geschlossen wird, wenn das aufschäumende Gemisch den nach Schließen des Werkzeugs verbliebenen Öffnungen nahe kommt und aus dem Werkzeug auszutreten droht. Es sind aber auch andere Methoden bekannt, um das Austreten von Schaumstoff zu verhindern, wie z. B. Labyrinthe und offenzellige Schaumstofffolien.

In einem weiteren Verfahren werden zwei Faserverbundhalbzzeuge zunächst fest oder lose verbunden, dann in ein Werkzeug eingelegt, das weitgehend geschlossen wird, dann wird ein reaktionsfähiges Gemisch in den Hohlraum eingetragen und der aufschäumfähige Kunststoff bzw. das reaktionsfähige Gemisch schäumt zwischen den Faserverbundhalbzeugen auf, wobei bevorzugt das Werkzeug weiter geschlossen wird, wenn das aufschäumende Gemisch den nach Schließen des Werkzeugs verbliebenen Öffnungen nahe kommt und aus dem Werkzeug auszutreten droht. Es sind aber auch andere Methoden bekannt, um das Austreten von Schaumstoff zu verhindern, wie z. B. Labyrinthe und offenzellige Schaumstofffolien.

Je nach Design des Fertigteils kann aber auch ein geringer Austrieb von Schaumstoff akzeptabel sein, wenn das vollständige Schließen des Werkzeuges zu kompliziert sein sollte oder zu einer unzureichenden Qualität des Fertigteils führte.

Die zuvor beschriebene Aufgabe wird weiterhin gelöst bei Verwendung eines zuvor beschriebenen Strukturbauteils zur Herstellung eines Fahrzeugkarosseriebauteils, insbesondere einer Heckklappe, einer Motorhaube oder eines Dachelements.

Durch ihre strukturellen mechanischen Eigenschaften und das geringe Gewicht eignen sich die Strukturbauteile insbesondere für Fahrzeugkarosseriebauteile. Weiterhin erlaubt insbesondere die hohe Oberflächengüte eine Verwendung dieser Strukturbauteile für horizontal angeordnete Komponenten wie Heckklappen, Motorhauben oder Dachelemente, welche aufgrund ihrer großen Fläche und exponierten Lage eine besonders hohe Oberflächengüte aufweisen müssen.

Weiterhin ist das beschriebene Strukturbauteil insbesondere als Fahrzeugkarosseriebauteil geeignet, da es die mechanischen Eigenschaften mit der individuell einstellbaren Oberflächenbeschaffenheit kombiniert, sodass eine nachträgliche Kombination mit Verstärkungselementen oder Oberflächenelementen, wie beispielsweise bei der traditionellen Spaceframe-Bauweise, nicht erforderlich ist.

Im Folgenden werden verschiedene Ausführungsbeispiele des Strukturbauteils, des Verfahrens zur Herstellung eines Strukturbauteils und der Verwendung eines Strukturbauteils beschrieben. Auch wenn die Ausführungsbeispiele teilweise speziell nur für das Strukturbauteil, das Verfahren oder die Verwendung beschrieben sind, gelten sie jeweils entsprechend sowohl für das Strukturbauteil, als auch für das Verfahren und die Verwendung.

Die Matrix der Faserverbundschicht ist vorzugsweise ein thermoplastischer Kunststoff. Geeignete thermoplastischen Kunststoffe sind Polycarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA), Polyamide (bevorzugt Polyamid 6 (PA6) und Polyamid 6,6 (PA6,6)) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) oder Mischungen aus den genannten Polymeren sowie Polycarbonat-Blends mit olefinischen Copolymeren oder Pfropfpolymeren, wie beispielsweise Styrol/Acrylnitril-Copolymeren und gegebenenfalls weiteren der oben genannten Polymeren.

Bevorzugte thermoplastische Kunststoffe sind ausgewählt aus mindestens einem aus der Gruppe Polycarbonat, Polyamid (bevorzugt PA6 und PA6,6) und Polyalkylacrylat (bevorzugt Polymethylmethacrylat), sowie Mischungen dieser Thermoplasten mit beispielsweise Polyalkylenterephthalaten (bevorzugt Polybutylenterephthalat), Schlagzähmodifikatoren wie Acrylatkauschuken, ABS-Kautschuken oder Styrol/Acrylnitril-Copolymeren. Die Thermoplaste enthalten im allgemeinen übliche Additive wie Entformungsmittel, Thermostabilisatoren, UV-Absorber.

Bevorzugte thermoplastische Kunststoffe sind Polycarbonate (Homo- oder Copolycarbonate) sowie Mischungen von Polycarbonat mit Polyalkylenterephthalat (insbesondere mit Polybutylenterephthalat). Der Anteil des Polyalkylenterephthalats beträgt im allgemeinen 5 bis 95 Gew.-%, bevorzugt 10 bis 70 Gew.%, insbesondere 30 bis 60 Gew.-%, bezogen auf die Gesamtzusammensetzung, weiterhin bevorzugt sind Mischungen der Polycarbonate oder Polycarbonat/Polyalkylenterephthalat-Blends mit ABS- und/oder SAN-Copolymeren. Bevorzugte Thermoplaste sind solche, bestehend aus Polycarbonaten und Mischungen von Polycarbonaten mit Polymeren, ausgewählt aus mindestens einem der Gruppe der Polyalkylenterephthalate, insbesondere Polybutylenterephthalat (wie oben beschrieben), sowie ABS-Kautschuke oder Acrylatkautschuke, gegebenenfalls mit Styrol/Acrylnitril-Copolymeren.

Polycarbonate im Sinn der vorliegenden Erfindung sind sowohl Homopolycarbonate, Copolycarbonate als auch Polyestercarbonate, wie sie beispielsweise in der EP-A 1,657,281 beschrieben sind.

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Die Herstellung der vorzugsweise zu verwendenden Polycarbonate erfolgt prinzipiell in bekannter Weise aus Diphenolen, Kohlensäurederivaten und gegebenenfalls Verzweigern.

Besonders bevorzugte Diphenole sind 4,4'-Dihydroxydiphenyl, Bisphenol-A, 2,4-Bis(4-hydroxyphenyl)-2-methylbutan, 1,1 -Bis-(4-hydroxyphenyl)-cyclohexan, 1,1 -Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierte oder chlorierte Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Die thermoplastischen, aromatischen Polycarbonate haben mittlere Molekulargewichte (Gewichtsmittel Mw, gemessen durch GPC (Gelpermeationschromatographie mit Polycarbonatstandard) von 15.000 bis 50.000 g/mol, vorzugsweise 20.000 bis 40.000 g/mol, besonders bevorzugt 26.000 bis 35.000 g/mol.

Die Matrix des Faserverbundmaterials ist vorzugsweise ein thermoplastischer Kunststoff, welcher als thermoplastisches Bindemittel zwischen den Fasern fungiert. Der Faserverbund der Faserverbundschicht enthält im Allgemeinen 20 - 70 Vol.-%, bevorzugt 30 - 55 Vol.-%, besonders bevorzugt 35 - 50 Vol.-%, Fasern, bezogen auf das fertige Composite-Sheet.

Der für die Füllung des Verbundelementes verwendete Schaumstoff kann überwiegend offenzellig oder geschlossenzellig sein und verschiedenste Füllstoffe enthalten. Für das Aufschäumen können chemische oder physikalische Treibmittel genutzt werden. Geeignete Polymere zur Herstellung von solchen Kernlagen können isocyanat-basiert (Polyurethan, Polyharnstoff, Polyisocyanurat, Polyoxazolidinon, Polycarbodiimid), Epoxid-basiert, Phenol-basiert, Melamin-basiert, PVC, Polyimid, Polyamid oder Mischungen der genannten Polymere sein, wobei Duromere bevorzugt und isocyanat-basierte Duromere und ihre Mischungen besonders bevorzugt sind. Geeignete Polyurethane basieren auf kurzkettigen Polyetherpolyolen mit einem Äquivalentgewicht von 60 - 400 g/mol oder langkettigen Polyetherpolyolen mit einem Äquivalentgewicht von 400 - 3000 g/mol.

Die genannten Schaumstoffe sind bevorzugt stabil oberhalb der Erweichungstemperatur des in den Faserverbundhalbzzeugen eingesetzten Polymers, wobei als Grenze der Stabilität die Temperatur gilt, bei der der Wärmeausdehnungskoeffizient alpha des Schaumstoffs, gemessen mit den Messparametern der ASTM E 831 (Campus), kleiner als Null wird.

Mit dem zuvor beschriebenen Strukturbauteil kann eine hohe Oberflächengüte erreicht werden, welche beispielsweise eine gleichmäßige Lackierung des Strukturbauteils und so den Einsatz in besonders exponierten Bereichen, wie in der Karosserie eines Kraftfahrzeugs, erlaubt.

Bei der Herstellung von Faserverbundwerkstoffen mit einem Fasermaterial und einer das Fasermaterial einbettenden Matrix auf Basis thermoplastischer Kunststoffe kommt es beim Abkühlen zu unterschiedlichen Schwindungen der Materialien. Während Fasermaterialien typischerweise nur eine sehr geringe Schwindung bzw. im Falle von Kohlefasern sogar eine negative Schwindung aufweisen, ist die Schwindung thermoplastischer Kunststoffe höher. Da die Konzentration der Fasern innerhalb der Matrix lokal variiert, gibt es folglich abhängig von der Lage der Fasern Bereiche mit mehr Matrixmaterial und Bereiche mit weniger Matrixmaterial, so dass die Schwindung entsprechend unterschiedlich stark ausfällt. Hierdurch kann sich eine ungleichmäßige Oberfläche des Faserverbundwerkstoffs ergeben, auf der sich die Faserstruktur des Werkstoffs abzeichnet. Die bei der zuvor beschriebenen Ausführungsform des Strukturbauteils verwendeten, insbesondere amorphen, Polycarbonate für die Matrix der Faserverbundschichten weisen gegenüber anderen, insbesondere teilkristallinen Kunststoffen, um etwa 50 % geringere Schwindungen auf, so dass ein Abzeichnen der Fasern auf der Oberfläche verhindert werden kann.

Bei einer weiteren Ausführung des Strukturbauteils ist die Faserlage der ersten und/oder der zweiten Faserverbundschicht als unidirektionale Faserlage, als Gewebelage, als Wirrfaserlage oder als Kombination daraus ausgebildet. Vorzugsweise werden unidirektionale Faserlagen verwendet, da mit diesen eine bessere Oberflächenqualität erreicht werden kann. Bei unidirektionalen Faserlagen, die zum Teil auch als unidirektionale (UD) Tapes bezeichnet werden, handelt es sich um Fasergelege, bei denen die Fasern nebeneinander in einer Richtung liegen. Daher ist die Oberfläche unidirektionaler Faserlagen glatter als beispielsweise bei Gewebelagen, so dass auch eine glattere Oberfläche der ersten und/oder zweiten Faserverbundschicht und damit des Strukturbauteils erreicht werden kann. Weiterhin kann die Richtung der Fasern einer unidirektionalen Faserlage an die Hauptbelastungsrichtung des Strukturbauteils angepasst werden, so dass das Strukturbauteil auf diese Weise gezielt für seinen Einsatzzweck verstärkt werden kann.

Bei einer weiteren Ausführungsform des Strukturbauteils umfasst das Fasermaterial der ersten und/oder der zweiten Faserverbundschicht Fasern aus einer oder mehreren der folgenden Faserarten: Glasfasern, Carbonfasern, Basaltfasern, Aramidfasern und metallische Fasern. Diese Fasern sind insbesondere gegenüber Naturfasern bevorzugt, da sie den hohen Temperaturen bei der Herstellung der Faserverbundbleche bzw. der Strukturbauteile standhalten können. Bei Verwendung von Polycarbonaten für die Matrix der Faserverbundschichten liefern insbesondere Glasfasern und Carbonfasern die besten Ergebnisse.

Bei einer weiteren Ausführungsform des Strukturbauteils liegt der Volumengehalt des Fasermaterials der ersten und/oder der zweiten Faserverbundschicht am Gesamtvolumen der jeweiligen Faserverbundschicht im Bereich von 30 bis 60 Vol.-%, vorzugsweise im Bereich von 40 bis 55 Vol.-%. Bei höheren Volumengehalten des Fasermaterials enthält die Faserverbundschicht insgesamt zu wenig Matrixmaterial, so dass keine ausreichende Konsolidierung der Fasern, d.h. eine Imprägnierung im Mikrobereich, erreicht wird. Nur wenn eine Faser mit dem Kunststoff der Matrix umbettet ist, kann sie halten und zur Steifigkeit des Gesamtbauteils beitragen. Bei Fasergehalten von maximal 60 Vol.-% bzw. maximal 55 Vol.-% kann erreicht werden, dass ein Großteil, insbesondere im Wesentlichen alle einzelnen Fasern mit dem Kunststoff der Matrix umbettet sind und so eine hohe Steifigkeit des Strukturbauteils erreicht wird. Bei zu hohen Kunststoffanteilen, insbesondere wenn der Volumengehalt des Fasermaterials geringer ist als 30 Vol.-% bzw. 40 Vol.-%, wird die entsprechende Faserverbundschicht und damit das Strukturbauteil einfach nur dicker und schwerer, ohne dass eine entsprechende Verbesserung der mechanischen Eigenschaften erreicht wird.

Der thermoplastische Kunststoff der ersten und/oder zweiten Faserverbundschicht weist vorzugsweise eine Erweichungstemperatur von mindestens 120 °C, vorzugsweise von mindestens 130 °C auf. Auf diese Weise kann ein Strukturbauteil zur Verfügung gestellt werden, das auch bei hohen, je nach Anwendungszweck im Einsatz auftretenden Temperaturen von beispielsweise über 100 °C, vorzugsweise von über 110 °C, noch formstabil ist.

Bei einer weiteren Ausführungsform des Strukturbauteils beträgt die Zersetzungstemperatur des aufgeschäumten Kunststoffs der Schaumschicht mindestens 130 °C, vorzugsweise mindestens 160 °C, insbesondere über 180 °C. Unter der Zersetzungstemperatur des aufschäumenden Kunststoffs wird die Temperatur verstanden, bei der sich die Schaumstruktur der durch den aufschäumenden Kunststoff gebildeten Schaumschicht durch Schrumpfungsprozesse zersetzt. Schrumpfungsprozesse sind dadurch charakterisiert, dass der Längenausdehnungskoeffizient des Schaumstoffs negativ ist. Daher wird zur Bestimmung des Zersetzungsprozesses die Längenausdehnung in Anlehnung an ASTM E831 (Campus) im Temperaturbereich von 273 K aufwärts bestimmt. Durch die Verwendung eines Kunststoffs für die Schaumschicht, dessen Zersetzungstemperatur bei oder oberhalb der bevorzugten Erweichungstemperatur des Composite-Sheets liegt, wird ein auch bei hohen Temperaturen insgesamt formstabiles Strukturbauteil zur Verfügung gestellt. Weiterhin wird auf diese Weise auch eine nachträgliche thermische Umformung des Strukturbauteils erleichtert, da die Schaumstruktur bei den für die Umformung der Faserverbundschichten erforderlichen Temperaturen noch nicht zu weich geworden ist, wodurch ansonsten eine Verzerrung des Strukturbauteils hervorgerufen werden könnte. Vorzugsweise liegt die Zersetzungstemperatur des aufgeschäumten Kunststoffs über der Erweichungstemperatur des für die Matrix der ersten und/oder zweiten Faserverbundschicht verwendeten Kunststoffs, und zwar insbesondere um mindestens 20 °C, vorzugsweise um mindestens 40 °C.

Bei einer weiter bevorzugten Ausführungsform handelt es sich bei der Schaumschicht um eine duroplastische Schaumschicht. Gegenüber den thermoplastischen Kunststoffen für die erste und/oder zweite Faserverbundschicht ist eine duroplastische Schaumschicht typischerweise noch bei höheren Temperaturen von beispielsweise von bis zu 180 °C formstabil.

Weiterhin wird mit einer höheren Zersetzungstemperatur des aufgeschäumten Kunststoffs der Schaumschicht erreicht, dass bei einem nachträglichen Erweichen der ersten oder zweiten Faserverbundschicht, beispielsweise zum Verschweißen mit einer anderen Komponente, ein Zersetzen der Schaumschicht und damit ein unerwünschtes Verformen bzw. Zersetzen des Strukturbauteils verhindert wird.

Bei einer weiteren Ausführungsform des Strukturbauteils umfasst der Kunststoff der Schaumschicht einen oder mehrere Kunststoffe aus der folgenden Gruppe: Geeignete Polymere zur Herstellung von solchen Kernlagen können isocyanat-basiert (Polyurethan, Polyharnstoff, Polyisocyanurat, Polyoxazolidinon, Polycarbodiimid), Epoxid-basiert, Phenol-basiert, Melamin-basiert, PVC, Polyimid, Polyamid oder Mischungen der genannten Polymere sein, wobei Duromere bevorzugt und isocyanat-basierte Duromere und ihre Mischungen besonders bevorzugt sind. Weitere geeignete schäumbare Polymere sind Polycarbonate oder Polyolefine. Polyurethane sind für die Schaumschicht beispielsweise deshalb sehr gut geeignet, weil sie einerseits gut an den Faserverbundschichten haften und damit eine stabile Verbindung des mehrschichtigen Strukturbauteils bewirken und andererseits typischerweise eine hohe Zersetzungstemperatur im Bereich von ca. 150 bis 160 °C aufweisen, so dass auch bei hohen Temperaturen formstabile Strukturbauteile hergestellt werden können.

Bei einer weiteren Ausführungsform des Strukturbauteils weist der aufgeschäumte Kunststoff der Schaumschicht eine Dichte im Bereich von 80 bis 150 g/cm³, bevorzugt 85 bis 130 g/cm³, besonders bevorzugt 90 bis 120 g/cm³ auf. Auf diese Weise werden einerseits gute akustische Dämmeigenschaften, ausreichend hohe Festigkeiten und noch gute thermische Dämmeigenschaften und andererseits ein geringes Gewicht des Strukturbauteils erreicht.

Bei einer weiteren Ausführungsform des Strukturbauteils weist die Schaumschicht mindestens zwei Teilbereiche mit voneinander verschiedenen Dicken auf. Das zuvor beschriebene Strukturbauteil kann in Bezug auf seine räumliche Ausgestaltung sehr flexibel an den jeweiligen Einsatzzweck angepasst werden. Insbesondere kann die Außengeometrie des Strukturbauteils durch das Vorsehen einer Schaumschicht mit verschieden dicken Bereichen an die jeweilige Verwendung angepasst werden. Insbesondere kann das Strukturbauteil Abschnitte aufweisen, in denen die erste und die zweite Faserverbundschicht nicht parallel, sondern in einem Winkel von mehr als 0°, beispielsweise von mehr als 5°, zueinander verlaufen, so dass das Strukturbauteil einen Bereich mit sich graduell verändernder Dicke umfasst. Vorzugsweise wird die lokale Dicke des Strukturbauteils an die mechanischen Belastungen bei dem geplanten Verwendungszweck des Strukturbauteils angepasst. Beispielsweise kann ein Strukturbauteil für den Einsatz bei einer Kofferaumklappe im Bereich der Scharniere lokal dicker und in weniger belasteten Bereichen lokal dünner ausgebildet werden.

Bei einer weiteren Ausführungsform des Strukturbauteils weist die erste und/oder die zweite Faserverbundschicht eine Dicke im Bereich von 0,2 bis 6,0 mm, vorzugsweise von 0,4 bis 4,0 mm, insbesondere von 0,8 bis 1,5 mm, auf. Insbesondere bei einer Dicke im Bereich von 0,8 bis 1,5 mm konnten gute mechanische Eigenschaften in Bezug auf die Steifigkeit erreicht werden. Eine geringere Schichtdicke als 0,8 mm geht auf Kosten der Steifigkeit, während mit einer Dicke von mehr als 1,5 mm zwar sehr steife Bauteile erreicht werden können, allerdings bei einem entsprechend hohen Gewicht. Für besonders stabil auszubildende Strukturbauteile, beispielsweise für eine Motorhaube, sind jedoch auch Dicken von bis zur 4 mm, bis zu 5 mm oder bis zu 6 mm denkbar. Weiterhin sind für sehr kleine Bauteile auch geringere Schichtdicken, insbesondere ab 0,4 mm oder sogar ab 0,2 mm denkbar. Grundsätzlich können die erste und die zweite Faserverbundschicht dieselbe Dicke oder voneinander verschiedene Dicken aufweisen.

Bei einer weiteren Ausführungsform des Strukturbauteils weist die Schaumschicht eine maximale Dicke im Bereich von 2 bis 80 mm, vorzugsweise von 8 bis 25 mm auf. Unter der maximalen Dicke wird vorliegend der maximale Abstand zwischen der ersten und der zweiten Faserverbundschicht verstanden, zwischen denen die Schaumschicht angeordnet ist. Die Schaumschicht muss nicht notwendigerweise eine konstante Dicke aufweisen, sodass der Dickenbereich bei der vorliegenden Ausführungsform auf die maximale Dicke der Schaumschicht bezogen ist.

Besonders gute Eigenschaften hinsichtlich der Steifigkeit werden in einem Bereich von 8 bis 25 mm erreicht. Dicken von weniger als 8 mm gehen auf Kosten der Steifigkeit und erfordern zudem einen höheren Aufwand bei der Herstellung, da das Ausbilden einer Schaumschicht von weniger als 8 mm beim Verspritzen schwierig oder zumindest schwieriger durchführbar ist. Bei Dicken von mehr als 25 mm werden zwar sehr steife Bauteile erzielt, jedoch auf Kosten eines höheren Gewichts, sodass der Vorteil der Leichtbauweise des Strukturbauteils abnimmt. Bei bestimmten Anwendungen, in denen es beispielsweise auf eine sehr gute Dämmung ankommt, sind jedoch auch größere Dicken der Schaumschicht denkbar, insbesondere Dicken bis zu 80 mm.

Bei einer weiteren Ausführungsform des Strukturbauteils ist auf einer der Schaumschicht abgewandten Seite der ersten und/oder der zweiten Faserverbundschicht eine Kunststofffolie aufgebracht, insbesondere eine Polycarbonatfolie. Durch das Aufbringen einer zusätzlichen Folie auf mindestens eine der Faserverbundschichten des Strukturbauteils kann eine verbesserte Oberflächenqualität des Strukturbauteils erreicht werden. Insbesondere kann auch bei hohen Belastungen verhindert werden, dass sich die Faserstruktur aus einer der Faserverbundschichten auf der Oberfläche abzeichnet. Weiterhin kann die Oberfläche des Strukturbauteils mit der aufgebrachten Kunststofffolie individuell an die für den geplanten Einsatzzweck erforderlichen Oberflächeneigenschaften, beispielsweise in Bezug auf die Farb- und Strukturgebung etc., angepasst werden. Durch die zusätzliche Kunststofffolie kann das Strukturbauteil auch für eine zusätzliche Beschichtung, beispielsweise eine aufzubringende Lackschicht vorbereitet werden. Weiterhin kann die Kunststofffolie auch als kratzgeschützte Deckschicht ausgestaltet werden und somit eine konventionelle Lackierung ersetzen, insbesondere wenn sie mit einem UV-aushärtbaren Lacksystem versehen ist.

Bei der Kunststofffolie handelt es sich vorzugsweise um eine Folie aus Polycarbonat oder einem Polycarbonat-Gemisch. Durch die Verwendung einer solchen Folie wird eine gute Haftung mit der entsprechenden Faserverbundschicht hergestellt, insbesondere wenn diese ebenfalls eine Polycarbonatmatrix aufweist. Weiterhin wird so ein Strukturbauteil mit hoher Temperaturbeständigkeit erreicht, insbesondere für nachfolgende Umformprozesse.

Die Dicke der Folie beträgt liegt vorzugsweise im Bereich von 25 bis 1000 µm, weiter bevorzugt im Bereich von 50 bis 500 µm und insbesondere im Bereich von 75 bis 250 µm.

Bei einer Ausführungsform des Verfahrens wird eine Folie aus einem thermoplastischen Kunststoff beim Thermoformen des ersten oder des zweiten Faserverbundblechs so in einem beim Thermoformen verwendeten Umformwerkzeug angeordnet, dass es nach dem Thermoformen stoffschlüssig mit dem entsprechenden Faserverbundhalbzeug verbunden ist.

Es wurde festgestellt, dass eine solche Folie unmittelbar beim Thermoformen des Faserverbundblechs mit diesem verbunden werden kann. Auf diese Weise lässt sich einerseits eine flächige, gleichmäßige und stabile Verbindung zwischen der Folie und dem Faserverbundblech bzw. dem hergestellten Faserverbundhalbzeug herstellen. Andererseits wird auf diese Weise ein zusätzlicher Auftragsschritt zum Aufbringen der Folie auf das Faserverbundhalbzeug eingespart.

Bei einer weiteren Ausführungsform des Verfahrens wird die Folie vor dem Anordnen in dem Umformwerkzeug thermisch vorgeformt. Es hat sich herausgestellt, dass durch ein Vorformen der Folie ein gleichmäßiges Aufbringen der Folie auf das Faserverbundhalbzeug insbesondere unter Vermeidung von Faltenbildung möglich ist.

Bei einer weiteren Ausführungsform des Strukturbauteils ist auf einer der Schaumschicht abgewandten Seite der ersten und/oder der zweiten Faserverbundschicht oder auf einer darauf aufgebrachten Kunststofffolie eine Lackschicht aufgebracht. Es hat sich herausgestellt, dass das Strukturbauteil, insbesondere bei einer auf einer Faserverbundschicht aufgebrachten Kunststofffolie, gute Lackiereigenschaften aufweist, welche insbesondere nicht zu einer Abzeichnung der Faserstruktur im Lack führt. Die Lackschicht kann mehrschichtig ausgebildet sein, beispielsweise mit einer ersten Schicht aus einem Primersystem zur Vorbereitung des Untergrunds für weiter Schichten, einer zweiten Schicht aus einem Grundlack und einer dritten Schicht aus einem Decklack. Insbesondere kann die Lackschicht einen farbigen Grundlack (Basecoat) und einen darauf aufgebrachten, transparenten Decklack (Clearcoat) aufweisen, mit dem beispielsweise ein Tiefglanzeffekt erreicht werden kann. Beispielsweise kann die Lackschicht folgende Schichten aufweisen: eine erste Schicht aus einem Primersystem, eine Schicht aus rotmetallic Basecoat und eine dritte Schicht aus einem Hochglanz-Clearcoat.

Die Schichtdicke der Lackschicht beträgt vorzugsweise 15 - 300 µm, weiter bevorzugt 15 - 100 µm, insbesondere 20 - 50 µm.

Bei einer weiteren Ausführungsform des Strukturbauteils liegen die erste und die zweite Faserverbundschicht in mindestens einem Randbereich des Strukturbauteils unmittelbar aufeinander. Unter dem unmittelbaren Aufeinanderliegen wird vorliegend verstanden, dass die beiden Faserverbundschichten in dem Randbereich ohne einen dazwischen angeordneten Teil der Schaumschicht aufeinander liegen. Zwischen der ersten und zweiten Faserverbundschicht kann jedoch beispielsweise eine dünne Klebeschicht angeordnet sein, wodurch die erste und zweite Faserverbundschicht vorliegend jedoch weiterhin als im Wesentlichen unmittelbar aufeinander liegend angesehen werden. Mit dieser Ausführungsform wird ein Strukturbauteil zur Verfügung gestellt, bei dem die Schaumschicht zumindest in dem Randbereich durch die Faserverbundschichten umschlossen wird, so dass einerseits die Schaumschicht geschützt wird, beispielsweise vor mechanischer Einwirkung oder vor dem Eindringen von Feuchtigkeit, und andererseits eine verbesserte Oberflächenbeschaffenheit des Strukturbauteils in dem Randbereich erreicht wird. Vorzugsweise liegen die erste und die zweite Faserverbundschicht im Wesentlichen im gesamten Randbereich des Strukturbauteils unmittelbar aufeinander, so dass die Schaumschicht im Wesentlichen vollständig durch die beiden Faserverbundschichten umschlossen wird.

Bei einer weiteren Ausführungsform des Strukturbauteils sind die erste und/oder die zweite Faserverbundschicht in mindestens einem Randbereich des Strukturbauteils gebördelt. Beispielsweise kann eine der beiden Faserverbundschichten um die jeweils andere Faserverbundschicht gebördelt werden oder beide Faserverbundschichten können gemeinsam miteinander gebördelt werden. Auf diese Weise werden die Faserverbundschichten randseitig abgedichtet, sodass beispielsweise das Eindringen von Feuchtigkeit zwischen die Faserverbundschichten verhindert werden kann.

Beim Einsatz von Bauteilen als tragende und/oder verkleidende Strukturen beispielsweise einer Kraftfahrzeugkarosserie müssen die Bauteile häufig mit Krafteinleitungselementen wie zum Beispiel Scharnieren, Schlössern etc. versehen werden. Bei den im Stand der Technik verwendeten Stahlblechbauteilen können Krafteinleitungselemente beispielsweise mit der Unterkonstruktion verschweißt, vernietet oder durch eine stützende Unterblechkonstruktion mit diesem verbunden werden.

Im Zuge des Leichtbaus sollen Stahlblechbauteile jedoch durch leichtere Bauteile ersetzt werden. Ein Beispiel für ein vorteilhaftes Bauteil, durch das ein Stahlblechbauteil ersetzt werden kann, ist das zuvor beschriebene Strukturbauteil. Bei diesen Bauteilen ist zweckmäßiger Weise das Krafteinleitungselement nicht allein mit einer der Faserverbundschichten verbunden. So stellt sich ein Verschweißen eines Krafteinleitungselements mit einer Faserverbundschicht häufig als schwierig dar und führt häufig zu einer Verschlechterung der Oberflächenbeschaffenheit bzw. kann beim Schweißvorgang oder bei späterer Krafteinleitung zu Verzerrungen oder Beschädigungen des Strukturbauteils oder sogar zum Ablösen der Faserverbundschicht führen. Eine direkte Anbindung des Krafteinleitungselements an die Schaumschicht stellt sich ebenfalls als problematisch dar, da die Schaumschicht relativ weich ist und damit eine unmittelbare Krafteinleitung vom Krafteinleitungselement erschwert. Vergleichbare Probleme ergeben sich auch für andere Strukturbauteile, die eine Schaumschicht aufweisen.

Mit dem zuvor beschriebenen Strukturbauteil mit Verankerungsstruktur wird eine Struktur zur Verfügung gestellt, mit der eine gute Krafteinleitung von einem Krafteinleitungselement in einen weichen Schaum, wie zum Beispiel in die Schaumschicht des zuvor beschriebenen Strukturbauteils, ermöglicht wird. Zu diesem Zweck wird die Verzweigungsstruktur der Verankerungsstruktur in die Schaumschicht des Strukturbauteils integriert. Durch die mindestens drei sich von der Basis in verschiedene Richtungen erstreckenden Zweige weist die Verzweigungsstruktur gegenüber zweiglosen Strukturen ein hohes Oberflächen-zu-Volumen-Verhältnis auf, so dass eine größere Grenzfläche zwischen der Verzweigungsstruktur und dem Schaum der Schaumschicht für die Krafteinleitung zur Verfügung steht. Weiterhin ermöglichen die drei Zweige eine Krafteinleitung in den Schaum in verschiedene Richtungen. Vorzugsweise sind die Richtungen der Zweige so gewählt, dass sie teilweise in Zugrichtung und teilweise in Schubrichtung der einzuleitenden Kraft verlaufen. Die Richtungen der Zweige können insbesondere an die beim geplanten Einsatzzweck üblicherweise auftretenden Kraftrichtungen angepasst werden. Die Richtungen der Zweige können insbesondere so gewählt werden, dass die bei dem geplanten Einsatzzweck üblicherweise auftretenden Kraftrichtungen in Zugkräfte umgelenkt werden, d. h., dass die Kräfte im Wesentlichen in Längsrichtung der Zweige wirken.

Bei einem Ausführungsbeispiel der Verankerungsstruktur liegen die mindestens drei sich von der Basis in verschiedene Richtungen erstreckenden Zweige im Wesentlichen in einer Ebene. Sofern die Verzweigungsstruktur mehr als drei Zweige umfasst, liegen vorzugsweise alle diese Zweige im Wesentlichen in einer Ebene. Auf diese Weise kann die Verzweigungsstruktur auch in eine Schaumschicht eingebracht werden, deren Dicke viel geringer ist als deren Länge und Breite, wie es zum Beispiel bei der Schaumschicht des zuvor beschriebenen Strukturbauteils der Fall sein kann.

Das von der Basis weiter beabstandete Ende eines Zweigs wird im Folgenden als distales Ende dieses Zweigs bezeichnet. Das andere Ende des jeweiligen Zweigs wird entsprechend als proximales Ende bezeichnet.

Die Richtungen der drei Zweige sind vorzugsweise so gewählt, dass sie im Wesentlichen gleichmäßig um die Basis verteilt sind. Auf diese Weise kann eine Krafteinleitung in verschiedene Richtungen erfolgen. Besonders bevorzugt werden die Richtungen der drei Zweige so gewählt, dass die Basis innerhalb eines gedachten Dreiecks liegt, das von den distalen Enden der drei Zweige aufgespannt wird. Vorzugsweise weist das gedachte Dreieck eine möglichst große Fläche auf.

Bei einer weiteren Ausführungsform der Verankerungsstruktur weist die Basis einen sich im Wesentlichen quer zur Ebene der Zweige erstreckenden Anschlussbereich zur Anbindung an ein Krafteinleitungselement auf. Der Anschlussbereich kann beispielsweise stutzenförmig ausgebildet sein. Bei Einbettung der Verzweigungsstruktur in eine Schaumschicht kann auf diese Weise ein vorzugsweise aus der Schaumschicht herausragender Anschlussbereich geschaffen werden, an den ein Krafteinleitungselement angebracht werden kann.

Wird eine solche Verankerungsstruktur mit ihrer Verzweigungsstruktur in die Schaumschicht in einem zuvor beschriebenen Strukturbauteil integriert, erstreckt sich der Anschlussbereich in Richtung der ersten oder zweiten Faserverbundschicht. Vorzugsweise kann der Anschlussbereich teilweise in die erste oder zweite Faserverbundschicht hineinragen oder diese vollständig durchdringen, so dass ein Krafteinleitungselement an dem Anschlussbereich der Verankerungsstruktur und so an dem Strukturbauteil angebracht werden kann.

Bei einer weiteren Ausführungsform zweigt mindestens von einem Zweig der Verzweigungsstruktur der Verankerungsstruktur mindestens ein weiterer Zweig ab. Auf diese Weise wird eine mehrfach verzweigte Verzweigungsstruktur bereitgestellt, die einerseits ein günstigeres Oberflächen-zu-Volumen-Verhältnis aufweist und andererseits auch die formschlüssige Verbindung der Verzweigungsstruktur in einem Schaum verbessert. Vorzugsweise weist die Verzweigungsstruktur eine Verzweigungstiefe von mindestens 2, weiter bevorzugt mindestens 3, insbesondere mindestens 4 auf. Unter der Verzweigungstiefe der Verzweigungsstruktur wird die maximale Anzahl der Abzweigungen von der Basis bis zu einem distalen Ende eines Zweigs der Verzweigungsstruktur bezeichnet. Weist die Verzweigungsstruktur beispielsweise ausschließlich Zweige ohne weitere Verzweigungen auf, so ist die Verzweigungstiefe gleich 1. Zweigt von mindestens einem dieser Zweige ein weiterer Zweig ab, so ist die Verzweigungstiefe gleich 2. Zweigt von diesem abgezweigten Zweig mindestens ein weiterer Zweig ab, so ist die Verzweigungstiefe gleich 3 usw. Durch eine größere Verzweigungstiefe der Verzweigungsstruktur werden ein günstigeres Oberflächen-zu-Volumen-Verhältnis und eine bessere formschlüssige Verbindung der Verzweigungsstruktur in einem Schaum erreicht.

Bei einer weiteren Ausführungsform nimmt die Steifigkeit, insbesondere die Zug- und/oder Biegesteifigkeit, mindestens eines, vorzugsweise im Wesentlichen aller, Zweige der Verzweigungsstruktur der Verankerungsstruktur in distaler Richtung ab. Unter der distalen Richtung wird die Richtung in Richtung des distalen Endes des jeweiligen Zweigs verstanden. Durch eine abnehmende Steifigkeit in distaler Richtung erlauben die Zweige in distaler Richtung größere Verformungen bei Krafteinleitung. Dadurch wird erreicht, dass die Krafteinleitung nicht allein im Bereich der Basis bzw. im basisnahen Bereich der Verankerungsstruktur erfolgt, sondern im Wesentlichen über die gesamte Länge der Zweige.

Wenn ein Zweig über seine Länge eine konstante Steifigkeit aufweist, so führt eine von einem Krafteinleitungselement auf die Verankerungsstruktur ausgeübte Kraft, zum Beispiel eine Zugkraft, dazu, dass der Zweig nur im Bereich nahe der Basis gegen den diesen Bereich umgebenden Schaum gedrückt wird, so dass es auch nur in diesem Bereich zu einer Krafteinleitung kommt. Durch eine abnehmende Steifigkeit in distaler Richtung wird demgegenüber erreicht, dass der entsprechende Zweig im Wesentlichen über seine gesamte Länge gegen den umgebenden Schaum drückt, so dass eine Krafteinleitung auch im Wesentlichen über die gesamte Länge des Zweigs erreicht wird. Weist die Verzweigungsstruktur eine Verzweigungstiefe größer 1 auf, so nimmt die Steifigkeit, insbesondere die Zug- und/oder Biegesteifigkeit, vorzugsweise von einer auf die jeweils nächste Verzweigungstiefe ab.

Vorzugsweise ist mindestens ein Zweig der Verzweigungsstruktur so ausgebildet, dass bei einer Krafteinleitung in die Verankerungsstruktur die Krafteinleitung von dem Zweig in den Schaum einer den Zweig umgebenden Schaumschicht über mindestens 25 %, vorzugsweise mindestens 50 %, insbesondere mindestens 75 % der Länge des betreffenden Zweigs erfolgt. Dies kann beispielsweise dadurch erreicht werden, dass die Steifigkeit des Zweigs in distaler Richtung abnimmt. Vorzugsweise sind im Wesentlichen alle Zweige der Verzweigungsstruktur entsprechend ausgebildet.

Bei einer weiteren Ausführungsform nimmt der Querschnitt mindestens eines Zweigs der Verzweigungsstruktur der Verankerungsstruktur in distaler Richtung ab. Dadurch kann auf einfache Weise eine Abnahme der Steifigkeit, insbesondere der Zug- und/oder Biegesteifigkeit in distaler Richtung erreicht werden. Weiterhin kann auf diese Weise eine Materialeinsparung erreicht werden.

Bei einer weiteren Ausführungsform weisen mindestens ein Zweig der Verzweigungsstruktur der Verankerungsstruktur, vorzugsweise im Wesentlichen alle Zweige der Verzweigungsstruktur, eine Vielzahl von sich durch den Zweig hindurch erstreckenden Öffnungen auf. Auf diese Weise kann die Verzweigungsstruktur besser in eine Schaumschicht integriert werden, so dass insbesondere ein besserer Formschluss zwischen dem Schaum und der Verzweigungsstruktur entsteht. Unter einer sich durch den Zweig hindurch erstreckenden Öffnung wird eine tunnelartige Öffnung verstanden, die sich von einer Seite des Zweigs zu einer anderen Seite des Zweigs erstreckt. Diese Öffnung kann beispielsweise einen eckigen Querschnitt aufweisen wie bei einem Gitter, aber auch einen gerundeten oder runden Querschnitt.

Bei einer weiteren Ausführungsform ist mindestens ein Zweig der Verzweigungsstruktur der Verankerungsstruktur verrippt ausgebildet. Vorzugsweise sind im Wesentlichen alle Zweige der Verankerungsstruktur verrippt ausgebildet. Auf diese Weise können eine Vielzahl von sich durch den Zweig hindurch erstreckenden Öffnungen bereitgestellt werden, so dass der Formschluss zwischen einem Schaum und der Verzweigungsstruktur verbessert werden kann. Unter einer verrippten Ausbildung wird verstanden, dass der betreffende Zweig eine Mehrzahl von Längsstreben und eine Mehrzahl von Querstreben umfasst, so dass sich insgesamt eine gitterartige Struktur des Zweigs ergibt.

Bei einer weiteren Ausführungsform besteht die Verankerungsstruktur im Wesentlichen aus einem Kunststoff. Auf diese Weise kann eine leichtgewichtige Verankerungsstruktur für den Leichtbau bereitgestellt werden. Geeignete und bevorzugte Kunststoffe sind beispielsweise Polycarbonate, Polypropylene, Polyalkylenterephthalate, Polyamide oder Mischungen daraus. Alternativ kann die Verankerungsstruktur auch aus Metallen oder Metalllegierungen, bevorzugt aus Aluminium oder einer Aluminiumlegierung bestehen. Auch auf diese Weise kann eine leichte Verankerungsstruktur geschaffen werden.

Bei einer weiteren Ausführungsform ist die Verankerungsstruktur im Spritzguss hergestellt. Auf diese Weise kann auch eine komplexe Verzweigungsstruktur der Verankerungsstruktur günstig hergestellt werden.

Bei einer weiteren Ausführungsform ist an der Basis der Verankerungsstruktur ein Krafteinleitungselement angebracht. Bei dem Krafteinleitungselement kann es sich beispielsweise um ein Scharnier oder um einen Teil eines Schlosses handeln. Weiterhin kann es sich bei dem Krafteinleitungselement um ein separates Bauteil handeln oder das Krafteinleitungselement kann einteilig mit der Verankerungsstruktur ausgebildet sein.

Es wurde erkannt, dass mit der Verankerungsstruktur, deren Verzweigungsstruktur in die Schaumschicht eingebettet ist, eine unmittelbare Krafteinleitung von einem Krafteinleitungselement, wie zum Beispiel einem Scharnier, in das Leichtbauteil ermöglicht wird. Durch die Verzweigungsstruktur kann eine Kraft über eine große Oberfläche und einen großen Bereich in die Schaumschicht eingeführt werden, so dass eine erhebliche Krafteinleitung auch in die relativ weiche Schaumschicht möglich ist.

Eine direkte Krafteinleitung auf eine der Faserverbundschichten wäre demgegenüber nicht möglich, da ein Verschweißen eines Krafteinleitungselements mit einer der Faserverbundschichten zu sichtbaren Oberflächendefekten der Faserverbundschicht und/oder nachteiligen thermischen Veränderungen bzw. Spannungen in der Faserverbundschicht führen würde. Ein Verkleben eines Krafteinleitungselements mit einer der Faserverbundschichten würde bei Krafteinleitung zu lokalen Verformungen der Faserverbundschicht sowie ggf. ebenfalls zu nachteiligen thermischen Veränderungen bzw. Spannungen in der Faserverbundschicht führen.

Mit der zuvor beschriebenen Verankerungsstruktur kann eine solche nachteilige direkte Krafteinleitung in die Faserverbundschichten vermieden werden. Durch die im Wesentlichen vollständige Krafteinleitung in die Schaumschicht kann zudem auch auf zusätzliche Verstärkungsstrukturen am Krafteinleitungspunkt, d.h. im Bereich der Aufnahme, verzichtet werden.

Das Material der Verankerungsstruktur, insbesondere der Verzweigungsstruktur der Verankerungsstruktur, und das Material der Schaumschicht sind vorzugsweise so aneinander angepasst, dass die Materialien aneinander haften. Auf diese Weise wird neben einem Formschluss und/oder Kraftschluss zwischen dem Schaum der Schaumschicht und der Verzweigungsstruktur auch ein Stoffschluss erreicht, da der Schaum an der Oberfläche der Verankerungsstruktur haftet. Dies kann beispielsweise bei einer Schaumschicht aus PU-Schaum durch die Verwendung einer Polycarbonatmischung für die Verankerungsstruktur erreicht werden. Alternativ können für die Schaumschicht und die Verzweigungsstruktur auch Materialien verwendet werden, die nicht oder nur wenig aneinander haften, beispielsweise Polypropylen für die Verzweigungsstruktur in einem PU-Schaum. In diesem Fall ist über den Formschluss und/oder Kraftschluss zwischen dem Schaum der Schaumschicht und der Verzweigungsstruktur noch eine Krafteinleitung von der Verzweigungsstruktur in den Schaum der Schaumschicht möglich.

Vorzugsweise weist die erste oder die zweite Faserverbundschicht eine Aufnahme auf und die Verankerungsstruktur erstreckt sich bis in diese Aufnahme. Auf dieser Weise reicht die Verankerungsstruktur in den Bereich der Faserverbundschicht, so dass an dieser Stelle ein Krafteinleitungselement mit dem Strukturbauteil verbunden werden kann. Weiterhin wird auf diese Weise die Herstellung des Strukturbauteils vereinfacht, da die Verankerungsstruktur bei der Herstellung in der Aufnahme fixiert werden kann, bevor die Schaumschicht verspritzt wird. Die Aufnahme kann beispielsweise als Öffnung in der ersten oder zweiten Faserverbundschicht ausgebildet sein, durch die sich ein Teil der Verankerungsstruktur erstreckt.

Vorzugsweise wird für die Verzweigungsstruktur der Verankerungsstruktur ein Material gewählt, das einen ähnlichen Wärmeausdehnungskoeffizienten aufweist wie die Schaumschicht, insbesondere mit einer Abweichung vom Wärmeausdehnungskoeffizienten der Schaumschicht von weniger als 10 %, insbesondere weniger als 5 %. Auf diese Weise kann eine Verformung des Strukturbauteils bzw. eine Belastung der Verankerungsstruktur bei Temperaturänderung reduziert oder sogar verhindert werden.

Bei einer Ausführungsform des Verfahrens wird ein funktionales Element oder eine Verankerungsstruktur so in einer in das erste oder das zweite Faserverbundhalbzeug eingebrachte Aufnahme angeordnet, dass ein Teil des funktionalen Elements oder die Verzweigungsstruktur der Verankerungsstruktur in den Hohlraum hineinragt und dort beim Verschäumen des Hohlraums vom aufgeschäumten Kunststoff eingebettet wird. Auf diese Weise lässt sich das funktionale Element bzw. die Verzweigungsstruktur auf einfache Weise direkt bei der Herstellung des Strukturbauteils in dieses integrieren, sodass ein Strukturbauteil zur Verfügung gestellt werden kann, welches das funktionale Element bzw. die Verankerungsstruktur bereits aufweist und in welches dieses/diese nicht mehr nachträglich eingebaut werden muss, sofern dies überhaupt möglich wäre.

In diesem Zusammenhang wird die zuvor beschriebene Aufgabe zumindest teilweise durch die Verwendung eines zuvor beschriebenen Strukturbauteils zur Herstellung einer Bauteilgruppe, insbesondere für eine Fahrzeugkarosserie, umfassend das Strukturbauteil und ein an der Verankerungsstruktur des Strukturbauteils befestigtes Krafteinleitungselement, insbesondere ein Scharnier, gelöst. Bei der Bauteilgruppe kann es sich beispielsweise um eine Heckklappe mit einem Scharnier als Krafteinleitungselement handeln.

Weiterhin wird die Aufgabe zumindest teilweise durch eine solche Bauteilgruppe, insbesondere für eine Fahrzeugkarosserie, umfassend das Strukturbauteil und ein an der Verankerungsstruktur des Strukturbauteils befestigtes Krafteinleitungselement, insbesondere ein Scharnier, gelöst. Bei der Bauteilgruppe kann es sich beispielsweise um eine Heckklappe mit einem Scharnier als Krafteinleitungselement handeln.

Es wurde festgestellt, dass mit der beschriebenen Verankerungsstruktur das unmittelbare Anbringen von Krafteinleitungselementen, wie beispielsweise Scharnieren, aus verschiedenen Werkstoffen wie Metall oder Kunststoff, insbesondere einer Kunststoffmischung, insbesondere einer Polycarbonat-enthaltenden Kunststoffmischung, insbesondere einer Polycarbonat-Polyester-Mischung, möglich ist. Dadurch können die Strukturbauteile unmittelbar und auf einfache Weise mit einem Krafteinleitungselement, wie zum Beispiel einem Scharnier, verbunden werden, so dass die Strukturbauteile insbesondere für den Einsatz als Teil einer Heckklappe oder Motorhaube vorteilhaft sind.

Bei einer weiteren Ausführungsform umfasst das Strukturbauteil ein zumindest teilweise in die Schaumschicht eingebettetes funktionales Element, insbesondere ein optisches, elektrisches und/oder elektronisches Element. Es hat sich herausgestellt, dass funktionale Elemente gut in das Strukturbauteil, insbesondere in die Schaumschicht integrierbar sind, sodass auf diese Weise Strukturbauteile mit entsprechend integrierten funktionalen Elementen zur Verfügung gestellt werden können. Unter funktionalen Elementen werden Bauelemente verstanden, welche besondere funktionale Eigenschaften aufweisen, beispielsweise optische Elemente in Form von Lichtleitern oder Linsen oder elektrische bzw. elektronische Elemente in Form von Lichtquellen, Lichtsensoren, Sendern, Empfängern, insbesondere auch optischen, elektrischen oder akustischen Empfängern.

Insbesondere kann eine der beiden Faserverbundschichten eine entsprechende Aufnahme oder Ausnehmung für das funktionale Element aufweisen, sodass beispielsweise ein in die Schaumschicht eingebetteter Lichtleiter bis an die Oberfläche oder bis kurz unter die Oberfläche des Strukturbauteils geführt werden kann, um dort Licht zu emittieren.

Vorzugsweise kann auf eine der beiden Faserverbundschichten im Bereich der Aufnahme oder Ausnehmung eine halbdurchlässige optische Schicht aufgebracht werden. Auf diese Weise kann ein Oberflächenbereich des Strukturbauteils zur Verfügung gestellt werden, der einerseits Licht von einem darunter angeordneten optischen Element zumindest teilweise transmittieren lässt, so dass das Licht von außen sichtbar ist (beispielsweise als beleuchtetes Piktogramm) und andererseits das optische Element verdeckt, wenn dieses kein Licht emittiert, so dass dieser Oberflächenbereich optisch in die Grundfarbe der Schicht übergeht. Eine derartige Schicht wird auch als eine Schicht im Tag-Nacht-Design bezeichnet.

Weitere Merkmale und Vorteile der vorliegenden Erfindung werden im Folgenden anhand von Ausführungsbeispielen beschrieben, wobei auf die beigefügte Zeichnung Bezug genommen wird.

In den Zeichnungen zeigen
- Fig. 1: ein Faserverbundblech als Ausgangswerkstück zur Herstellung eines mehrschichtigen Strukturbauteils gemäß einem Ausführungsbeispiel der Erfindung,
- Fig. 2: ein weiteres Faserverbundblech zur Herstellung eines mehrschichtigen Strukturbauteils gemäß einem weitere Ausführungsbeispiel der Erfindung,
- Fig. 3: eine schematische Darstellung beispielhafter Verfahrensschritte zur Herstellung von Faserverbundblechen,
- Fig. 4: eine schematische Darstellung der Verfahrensschritte zur Herstellung eines Faserverbundhalbzeugs aus einem ersten Faserverbundblech gemäß einem Ausführungsbeispiel der Erfindung,
- Fig. 5: eine Schnittdarstellung entsprechend der in Fig. 4 mit "V" bezeichneten Schnittebene,
- Fig. 6: eine schematische Darstellung der Verfahrensschritte zur Herstellung einer vorgeformten Kunststofffolie für ein weiteres Ausführungsbeispiel des erfindungsgemäßen Verfahrens,
- Fig. 7: eine schematische Darstellung der Verfahrensschritte zur Herstellung eines mehrschichtigen Strukturbauteils aus zwei Faserverbundhalbzeugen gemäß einem Ausführungsbeispiel der Erfindung,
- Fig. 8: eine Schnittdarstellung entsprechend der in Fig. 7 mit "VIII" bezeichneten Schnittebene,
- Fig. 9: ein schematischer Querschnitt eines mehrschichtigen Strukturbauteils gemäß einem Ausführungsbeispiel der Erfindung,
- Fig. 10: ein schematischer Querschnitt eines mehrschichtigen Strukturbauteils gemäß einem weiteren Ausführungsbeispiel der Erfindung,
- Fig. 11: ein schematischer Querschnitt eines mehrschichtigen Strukturbauteils gemäß einem weiteren Ausführungsbeispiel der Erfindung mit einem eingebetteten funktionalen Element,
- Fig. 12: eine Verankerungsstruktur für ein mehrschichtiges Strukturbauteil gemäß einem Ausführungsbeispiel der Erfindung in perspektivischer Ansicht,
- Fig. 13: die Verankerungsstruktur aus Fig. 12 in Aufsicht,
- Fig. 14: die Verankerungsstruktur aus Fig. 12 im Querschnitt entlang der in Fig. 13 eingezeichneten Schnittlinie XIV und
- Fig. 15: ein mehrschichtiges Strukturbauteil gemäß einem weiteren Ausführungsbeispiel der Erfindung, in das die Verankerungsstruktur aus Fig. 12 integriert ist.

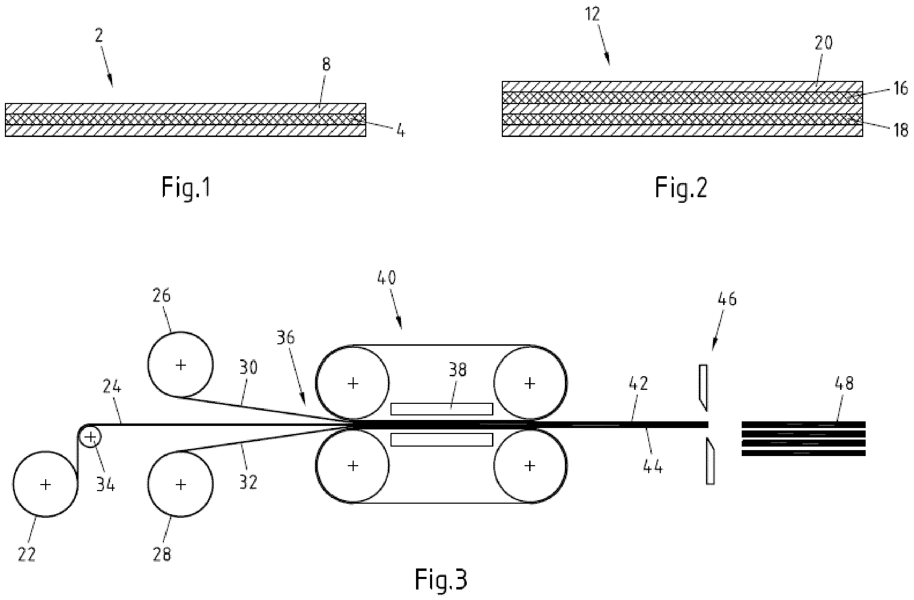

Im Folgenden werden anhand der Figuren 1 bis 8 Ausführungsbeispiele des erfindungsgemäßen Verfahrens zur Herstellung eines mehrschichtigen Strukturbauteils illustriert.

Zur Durchführung des Verfahrens sind zunächst ein erstes und ein zweites Faserverbundblech (Composite-Sheet) bereitzustellen. Figur 1 zeigt in seitlicher Schnittdarstellung ein Beispiel für ein solches für das Verfahren geeignetes Faserverbundblech 2 mit einer Faserlage 4 aus einem Glasfasergewebe, das in eine Matrix 8 aus thermoplastischem Kunststoff eingebettet ist. Figur 2 zeigt in seitlicher Schnittdarstellung ein ebenfalls für das Verfahren geeignetes Faserverbundblech 12, umfassend eine erste Faserlage 16 und eine zweite Faserlage 18 aus einem Carbonfasergewebe.

Die Faserlagen 16, 18 sind in eine Matrix 20 aus thermoplastischem Kunststoff eingebettet. Alternativ kann das für das Verfahren verwendete Faserverbundblech auch eine größere Zahl an Faserlagen, insbesondere auch aus anderen Fasergeweben, aufweisen.

Exemplarisch ist in Figur 3 ein Herstellungsverfahren für ein Faserverbundblech mit einer Faserlage dargestellt. Bei dem Verfahren werden von einer ersten Haspel 22 eine bandförmige Faserlage 24 und von einer zweiten und dritten Haspel 26, 28 jeweils eine bandförmige Kunststofffolie 30, 32 abgewickelt. Mittels Führungswalzen 34 werden die Faserlage 24 und die Kunststofffolien 30, 32 zu einer Lagenstruktur 36 übereinander angeordnet und einer mittels Heizelementen 38 beheizten Doppelbandpresse 40 zugeführt. In der Doppelbandpresse 40 wird die Lagenstruktur 36 durch Druck- und Wärmeeinwirkung zu einem Faserverbundwerkstoff 42 gepresst. Die Temperaturen der Doppelbandpresse sind dabei so hoch, dass die Kunststofffolien 30, 32 der Lagenstruktur 36 zumindest teilweise verflüssigen und eine die Faserlage 24 einbettende Matrix bilden. Der als kontinuierliches Band 44 aus der Doppelbandpresse 40 austretende Faserverbundwerkstoff 42 kann anschließend einer Konfektioniereinrichtung 46 zugeführt werden, in der das Band 44 beispielsweise zu Faserverbundblechen 48 geschnitten wird.

Exemplarisch ist ein Herstellprozess beschrieben. Durch die Erhöhung der Anzahl der Haspeln können auf vergleichbare Weise auch Faserverbundbleche mit mehreren Faserlagen hergestellt werden. Für das in Figur 2 gezeigte Faserverbundblech 12 können insbesondere fünf Haspeln verwendet werden, von denen zwei mit einer Faserlage und drei mit einer Kunststofffolie beladen sind.

Das erste und zweite bereitgestellte Faserverbundblech werden nun zu einem ersten und zweiten Faserverbundhalbzeug thermogeformt.

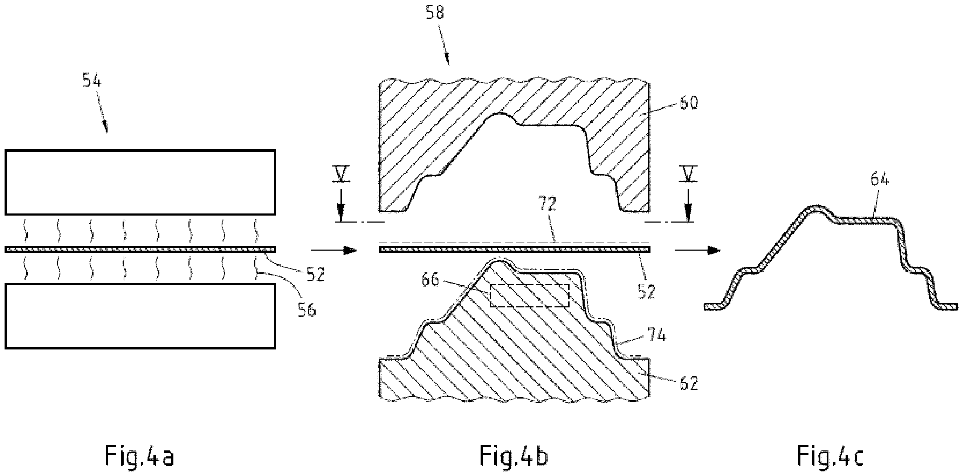

Die Verfahrensschritte zur Herstellung eines Faserverbundhalbzeugs aus einem Faserverbundblech durch Thermoformen gemäß einem Ausführungsbeispiel der Erfindung werden nun anhand der Figuren 4a-c illustriert.

Wie in Figur 4a dargestellt, wird hierzu zunächst ein Faserverbundblech 52 in einem Ofen 54, beispielsweise in einem Infrarotstrahlung 56 emittierenden Infrarotofen, auf eine Temperatur oberhalb der Erweichungstemperatur des Kunststoffs der Matrix des Faserverbundblechs 52 erwärmt, so dass das Faserverbundblech verformbar wird.

Das Faserverbundblech wird dann, wie in Figur 4b dargestellt, in einem Umformwerkzeug 58 angeordnet. Das Umformwerkzeug weist eine obere Werkzeughälfte 60 und eine untere Werkzeughälfte 62 auf, deren Konturen an die Form des herzustellenden Faserverbundhalbzeugs 64 angepasst sind. Beim Zusammenfahren der beiden Werkzeughälften 60, 62 wird das Faserverbundblech 52 dann zu einem Faserverbundhalbzeug 64 umgeformt.

Um ein vorzeitiges Wiedererstarren des Faserverbundhalbzeugs 64 zu vermeiden, können die obere und/oder die untere Werkzeughälfte 60, 62 mit dafür vorgesehenen Heizelementen 66 temperiert werden, beispielsweise auf eine Temperatur knapp unterhalb der Erweichungstemperatur.

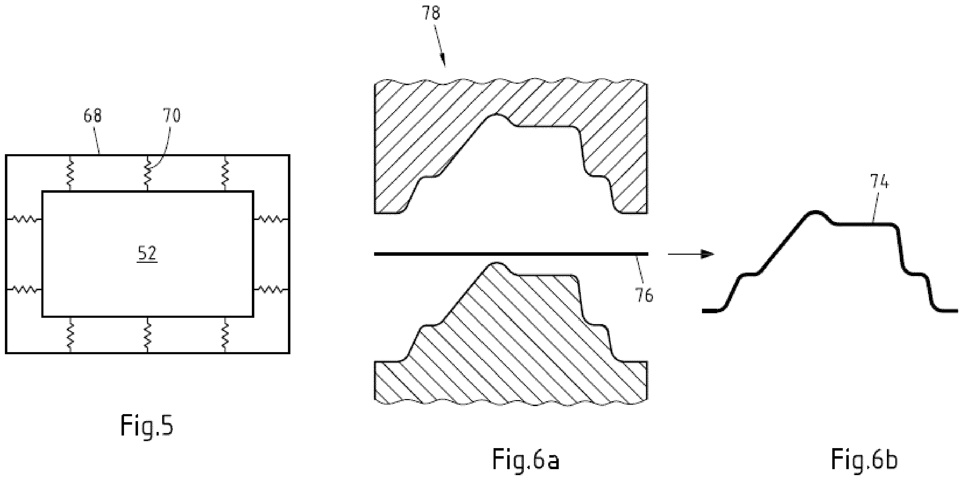

Abhängig von der Form des herzustellenden Faserverbundhalbzeugs 64 wird das Faserverbundblech 52 beim Umformen in verschiedenen Bereichen unterschiedlich stark gedehnt bzw. gestaucht. Um hierbei das Verzerren oder Reißen des Faserverbundblechs und eine Faltenbildung zu verhindern, kann das Faserverbundhalbzeug vor dem Umformen in einen Rahmen eingespannt werden. Ein solcher Rahmen 68 ist in der Schnittansicht in Figur 5 entlang der in Figur 4b mit "V" gekennzeichneten Schnittlinie dargestellt. Das Faserverbundblech wird umlaufend mit Federn 70, beispielsweise Spiralfedern, in dem Rahmen 68 eingespannt, wobei die Spannungen der einzelnen Federn 70 an den Verformungsgrad des entsprechenden Faserverbundblechbereichs beim Umformen angepasst sind. Auf diese Weise unterstützen die Federn 70 das ortsabhängige Dehnen und ggf. Stauchen des Faserverbundblechs 52 beim Umformen und verhindern eine Faltenbildung, d.h. ein Übereinanderlegen von Teilen des Faserverbundblechs.

Das Faserverbundblech 52 kann während des Umformens zum Faserverbundhalbzeug 64 gleichzeitig mit einer Kunststofffolie beschichtet werden. Hierzu kann eine Kunststofffolie 72 (in Figur 4b gestrichelt dargestellt) vor dem Umformen auf dem Faserverbundblech 52 angeordnet werden. Beim Zusammenfahren der beiden Werkzeughälften 60, 62 wird die Kunststofffolie dann zusammen mit dem Faserverbundblech 52 umgeformt und dabei mit diesem stoffschlüssig verbunden.

Alternativ kann auch eine vorgeformte Kunststofffolie 74 (in Figur 4b strichpunktiert dargestellt) in das Formwerkzeug 58 eingelegt werden. Der Vorteil bei der Verwendung einer bereits vorgeformten Kunststofffolie liegt darin, dass diese bereits entsprechend der endgültigen Form des Faserverbundhalbzeugs 64 vorgedehnt wurde und es so einerseits zu einer besseren Verbindung zwischen der vorgeformten Kunststofffolie 74 und dem Faserverbundhalbzeug 64 kommt und andererseits ein Reißen oder Übereinanderlegen der Kunststofffolie beim Umformen verhindert wird.

Eine vorgeformte Folie wie die Kunststofffolie 70 kann beispielsweise wie in den Figuren 6a-b dargestellt durch Umformen einer Kunststofffolie 76 in einem Umformwerkzeug 78 hergestellt werden.

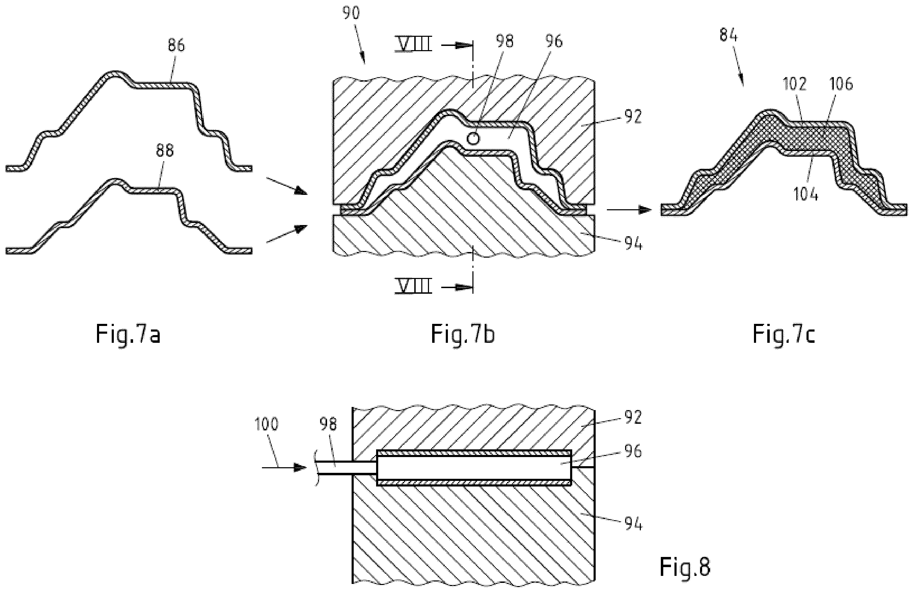

Die Figuren 7a-c illustrieren nun die Verfahrensschritte zur Herstellung eines mehrschichtigen Strukturbauteils 84 aus zwei Faserverbundhalbzeugen 86, 88 gemäß einem Ausführungsbeispiel der Erfindung. Die Faserverbundhalbzeuge 86, 88 können insbesondere wie das Faserverbundhalbzeug 64 mit den in den Figuren 4a-c illustrierten Verfahrensschritten hergestellt sein. Die Faserverbundhalbzeuge 86, 88 können dieselbe Form oder (wie in Figur 7a der Fall) verschiedene Formen aufweisen. Insbesondere können sie dazu auch mit verschiedenen Umformwerkzeugen hergestellt worden sein.

Das erste und das zweite Faserverbundhalbzeug 86, 88 werden, wie in Figur 7b dargestellt, in einem Schäumwerkzeug 90 angeordnet. Das Schäumwerkzeug 90 weist eine obere Werkzeughälfte 92 und eine untere Werkzeughälfte 94 auf, wobei die Kontur der oberen Werkzeughälfte 92 an die Kontur des ersten Faserverbundhalbzeugs 86 und die Kontur der unteren Werkzeughälfte 94 an die Kontur des zweiten Faserverbundhalbzeugs 88 angepasst ist. Das erste Faserverbundhalbzeug 86 wird in die obere Werkzeughälfte 92 eingelegt und dort beispielsweise durch einen Unterdruck gehalten. Das zweite Faserverbundhalbzeug 88 wird in die untere Werkzeughälfte 94 eingelegt. Beim Zusammenfahren der Werkzeughälften 92, 94 wird zwischen dem ersten und dem zweiten Faserverbundhalbzeug 86, 88 ein Hohlraum 96 ausgebildet.

Der Hohlraum 96 wird in der Zeichnungsebene der Figur 7b durch die Faserverbundhalbzeuge 86, 88 begrenzt, die an den Rändern jeweils unmittelbar aufeinander liegen. In der Richtung senkrecht zur Zeichnungsebene wird der Hohlraum 96 (wie in der Schnittansicht in Figur 8 entlang der in Figur 7b mit VIII gekennzeichneten Schnittebene dargestellt) durch entsprechend ausgebildete Seitenflächen der Werkzeughälften 92, 94 begrenzt.

Das Werkzeug 90 weist einen in den Hohlraum 96 reichenden Einlass 98 zum Einspritzen eines aufschäumenden Kunststoffs auf. Durch diesen Einlass 98 wird nach dem Zusammenfahren der ersten und zweiten Werkzeughälfte 92, 94 ein aufschäumender Kunststoff, zum Beispiel Polyurethan, in den Hohlraum 96 eingespritzt (vgl. Pfeil 100), so dass dieser mit dem aufschäumenden Kunststoff ausgefüllt wird.

Nach dem Aushärten des Kunststoffs sind die zwei Faserverbundhalbzeuge 86, 88 durch die von dem Kunststoff gebildete, dazwischen liegende Schaumschicht fest miteinander verbunden und das fertige Strukturbauteil 84 kann dem Schäumwerkzeug 90 entnommen werden.

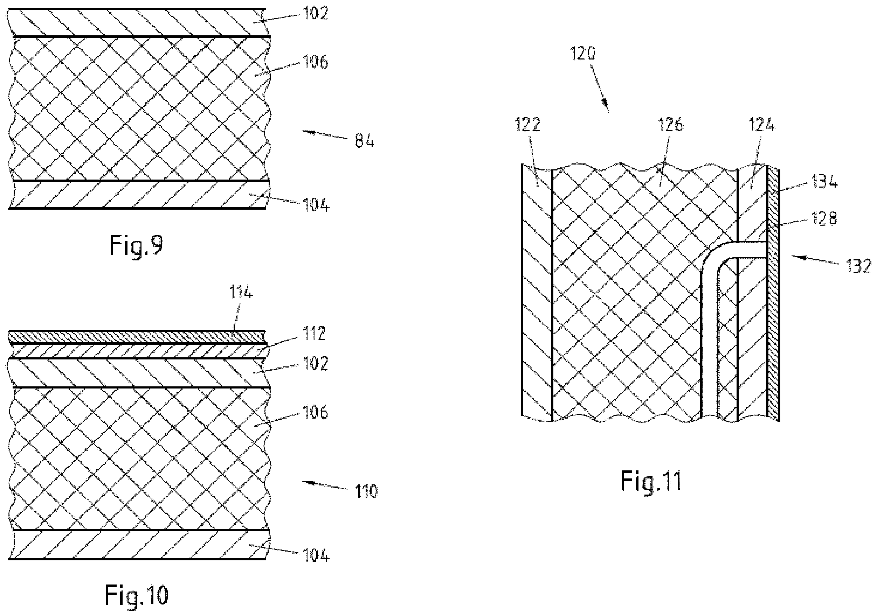

Ein Querschnitt des mehrschichtigen Strukturbauteils 84 ist in Figur 9 dargestellt. Das Strukturbauteil weist dementsprechend eine erste und eine zweite Faserverbundschicht 102, 104 und eine dazwischen angeordnete Schaumschicht 106 aus aufgeschäumtem Kunststoff auf. Die aus den Faserverbundhalbzeugen hergestellten Faserverbundschichten 102, 104 umfassen jeweils mindestens eine Faserlage aus einem Fasermaterial, die in eine auf einem thermoplastischen Kunststoff basierende Matrix eingebettet ist.

Figur 10 zeigt ein weiteres Ausführungsbeispiel eines mehrschichtigen Strukturbauteils 110, welches sich von dem mehrschichtigen Strukturbauteil 84 aus Figur 9 durch eine zusätzlich auf die Faserverbundschicht 102 aufgebrachte Kunststofffolie 112, die auf der Faserverbundschicht 102 eine zusätzliche Kunststoffschicht bildet, sowie eine darauf aufgebrachte Lackschicht 114 unterscheidet. Zur Herstellung des Strukturbauteils 110 kann beispielsweise eine Kunststofffolie bei der Herstellung des Faserverbundhalbzeugs für die erste Faserverbundschicht 102 mit diesem verbunden werden, zum Beispiel wie zuvor mit Bezug auf Figur 4b beschrieben.

Figur 11 zeigt ein alternatives Ausführungsbeispiel eines Strukturbauteils 120 mit einer ersten und einer zweiten Faserverbundschicht 122, 124 und einer dazwischen angeordneten Schaumschicht aus aufgeschäumtem Kunststoff 126. Die Faserverbundschicht 124 weist eine Aufnahme 128 auf, in die ein funktionales Element 130 aufgenommen ist, welches in den Bereich der Schaumschicht 126 hineinreicht und von dieser umspritzt ist. Bei dem funktionalen Element 130 kann es sich beispielsweise um einen an eine Lichtquelle angeschlossenen Lichtleiter handeln, mit dem auf der Seite der Faserverbundschicht 124 ein Beleuchtungsbereich 132 geschaffen werden kann. Zu diesem Zweck kann auf der Faserverbundschicht 124 eine halbdurchlässige optische Schicht 134 aufgebracht sein, die bei angeschalteter Lichtquelle das durch den Lichtleiter geführte Licht passieren lässt, so dass es von außen sichtbar ist, und bei ausgeschalteter Lichtquelle den Lichtleiter von außen nicht sichtbar erscheinen lässt. Insbesondere kann die Schicht 134 bei ausgeschalteter Lichtquelle von außen schwarz erscheinen.

Das in Figur 11 dargestellte Strukturbauteil 120 lässt sich auf einfache Weise herstellen, beispielsweise indem das funktionale Element 130 vor dem Zusammenfahren der Schäumwerkzeughälften 92, 94 in dem in Figur 7c dargestellten Verfahrensschritt in eine entsprechend vorgesehene Aufnahme eines der beiden Faserverbundhalbzeuge eingesetzt wird, so dass der in den Hohlraum 96 ragende Teil des funktionalen Elements 130 beim Einspritzen des aufschäumenden Kunststoffs mit diesem umspritzt wird.

Gegenstand der vorliegenden Erfindung ist weiterhin ein Verfahren zur Herstellung eines Strukturbauteils (84, 110, 120, 170),
- bei dem ein erstes und ein zweites Faserverbundblech (2, 12, 48, 52) bereitgestellt werden, wobei das erste und das zweite Faserverbundblech (2, 12, 48, 52) jeweils mindestens eine Faserlage (4, 16, 18, 24) aus einem Fasermaterial aufweisen, die in eine auf einem thermoplastischen Kunststoff basierende Matrix (8, 20) eingebettet ist,
- bei dem das erste Faserverbundblech (2, 12, 48, 52) zu einem ersten Faserverbundhalbzeug (64, 86, 88) und das zweite Faserverbundblech (2, 12, 48, 52) zu einem zweiten Faserverbundhalbzeug (64, 86, 88) thermogeformt werden,
- bei dem das erste und das zweite Faserverbundhalbzeug (64, 86, 88) so in einem Schäumwerkzeug (90) angeordnet werden, dass zwischen dem ersten und dem zweiten Faserverbundhalbzeug (64, 86, 88) ein Hohlraum (96) ausgebildet wird, der durch einen polymeren, bevorzugt duromeren, Schaumstoff, bevorzugt durch Aufschäumen in situ, ausgefüllt wird.

Auf diese Weise lassen sich auch andere funktionale Elemente in das zuvor beschriebene mehrschichtige Strukturbauteil integrieren.

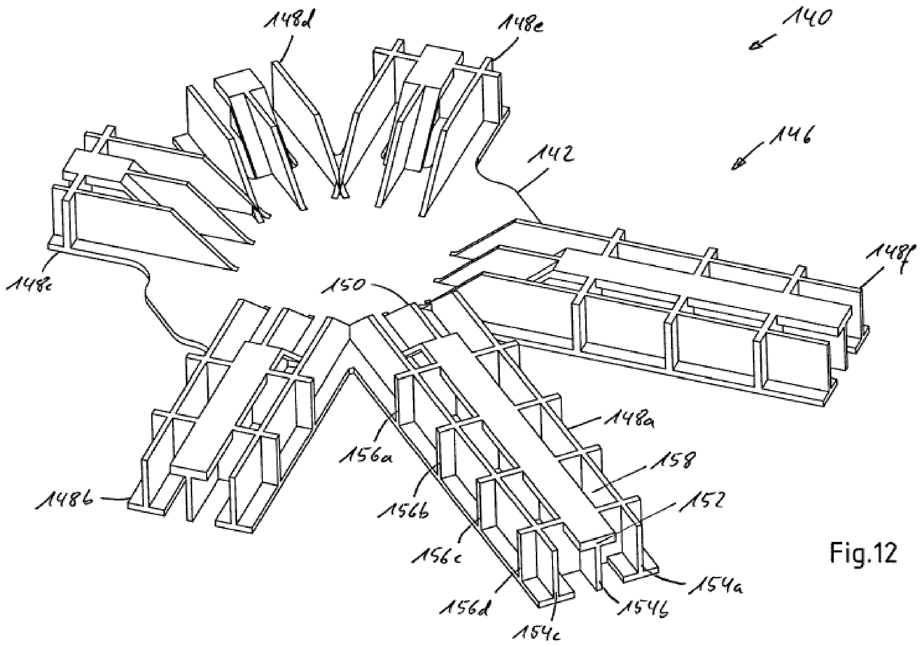

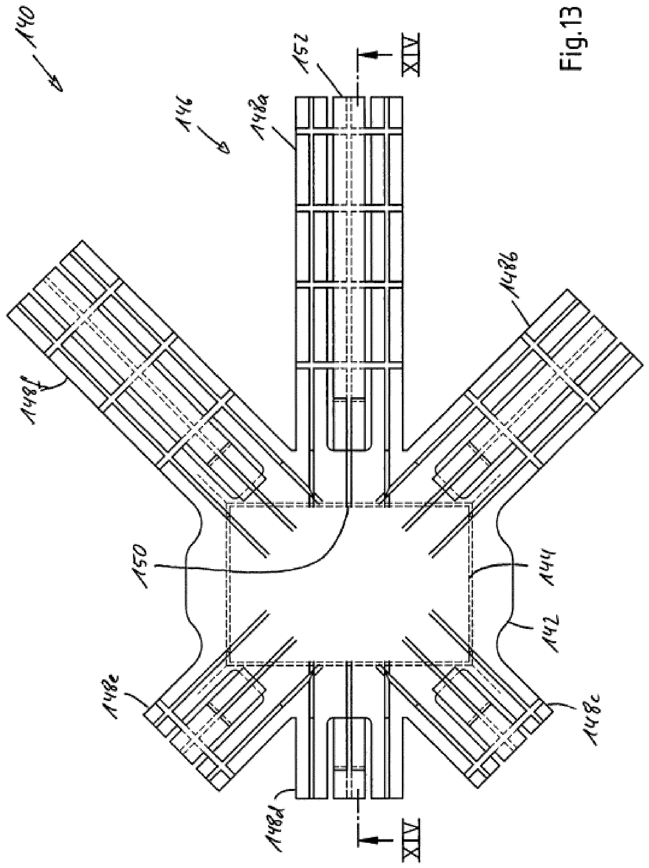

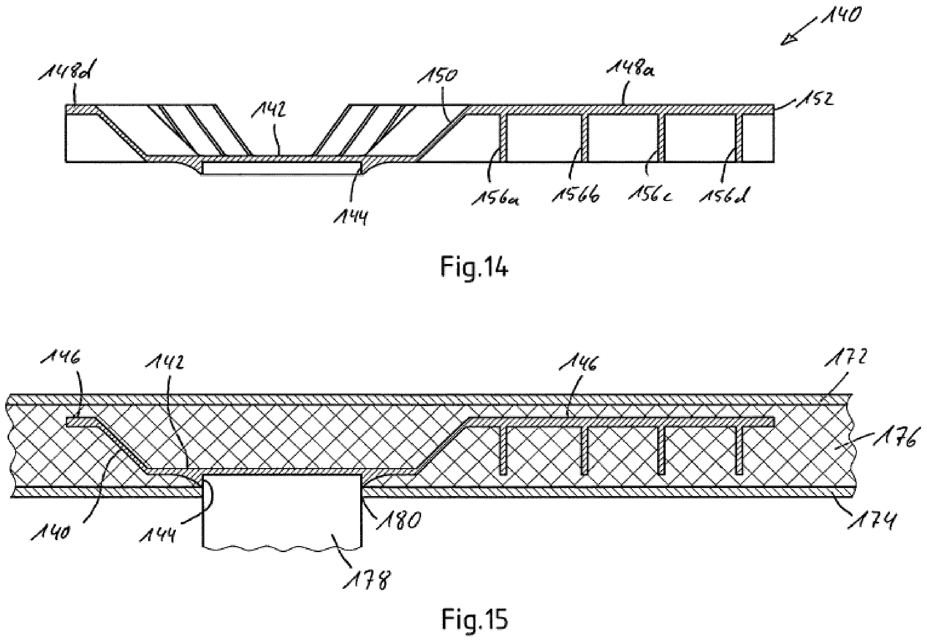

Im Folgenden wird anhand der Figuren 12 bis 14 eine Verankerungsstruktur für ein mehrschichtiges Strukturbauteil gemäß einem Ausführungsbeispiel der Erfindung beschrieben. Die Verankerungsstruktur 140 ist in Fig. 12 in perspektivischer Ansicht, in Fig. 13 in Aufsicht und in Fig. 14 im Querschnitt entlang der in Fig. 13 eingezeichneten Schnittlinie XIV dargestellt.

Die Verankerungsstruktur 140 weist eine plattenförmige Basis 142 zur Anbindung an ein Krafteinleitungselement auf. Die Basis 142 weist eine Aufnahme 144 für ein Krafteinleitungselement bzw. für ein Anbindungselement auf, über das die Basis 142 mit einem Krafteinleitungselement verbunden werden kann. Weiterhin weist die Verankerungsstruktur 140 eine Verzweigungsstruktur 146 auf, welche bei dem in Fig. 12 dargestellten Beispiel sechs sich von der Basis in verschiedene Richtungen erstreckende Zweige 148a-f umfasst. Der Aufbau der Zweige 148a-f wird im Folgenden anhand des Zweigs 148a erläutert:
Der Zweig 148a erstreckt sich vom seinem proximalen Ende 150 an der Basis 142 bis zum distalen Ende 152. Der Zweig 148a weist drei Längsrippen 154a-c und vier Querrippen 156a-d auf und ist dadurch verrippt ausgebildet. Die Längsrippen 154a-c haben jeweils ein T-förmiges Profil. Durch die verrippte Ausbildung des Zweigs 148a weist dieser eine Mehrzahl von sich durch den Zweig 148a erstreckenden Öffnungen 158 auf. Beim Umspritzen der Verzweigungsstruktur 146 mit einem Schaum wird damit erreicht, dass der Schaum in die Öffnungen 158 des Zweigs 148a dringt und damit einen besseren Formschluss zwischen dem Schaum und dem Zweig 148a bewirkt. Weiterhin wird auf diese Weise die Oberfläche des Zweigs 148a vergrößert, so dass eine Krafteinleitung in den Schaum über eine größere Oberfläche erfolgen kann.

Die Zweige 148a-d können, wie in Fig. 12 dargestellt, eine unterschiedliche Länge und damit ggf. eine unterschiedliche Anzahl von Querrippen aufweisen. Vorzugsweise ist die Richtung der Zweige 148a-d und deren Länge an den verfügbaren Bauraum innerhalb des Strukturbauteils angepasst, in den die Verankerungsstruktur 140 integriert werden soll.

Die in den Figuren 12 bis 14 dargestellte Verankerungsstruktur 140 kann beispielsweise aus einem Kunststoff hergestellt worden sein, vorzugsweise im Spritzguss. Alternativ kann die Verankerungsstruktur 140 auch aus einer Aluminiumlegierung bestehen.

Die Verankerungsstruktur 140 kann noch weiter verbessert werden, indem die Zweige 148a-d in distaler Richtung, d.h. in Richtung ihres jeweils distalen Endes, eine abnehmende Steifigkeit aufweisen. Hierzu kann beispielsweise der Querschnitt der Zweige 148a-d in distaler Richtung abnehmen. Dies kann beispielsweise dadurch realisiert werden, dass die Wanddicke und/oder die Anzahl der Längsrippen der Zweige 148a-d zum distalen Ende hin abnehmen. Weiterhin kann die Verzweigungsstruktur 140 mit einer größeren Verzweigungstiefe ausgebildet werden. Während die Verzweigungstiefe bei der in Figur 12 dargestellten Verzweigungsstruktur 1 beträgt, können in anderen Ausführungsbeispielen weitere Zweige von den Zweigen 148a-d abzweigen. Diese zusätzlichen Zweige der zweiten Verzweigungstiefe können beispielsweise von den äußeren Längsrippen 154a und 154c abzweigen. Alternativ können auch die beiden äußeren Längsrippen 154a und 154c selbst an einer Stelle vom Zweig 148a in jeweils eine andere Richtung abknicken und dadurch Zweige der zweiten Verzweigungstiefe bilden.

Figur 15 zeigt in Schnittdarstellung ein mehrschichtiges Strukturbauteil gemäß einem weiteren Ausführungsbeispiel der Erfindung, in welches die in Fig. 12 dargestellte Verankerungsstruktur 140 integriert ist. Das mehrschichtige Strukturbauteil 170 weist eine Struktur auf wie das in Figur 9 dargestellte Strukturbauteil 84 mit einer ersten Faserverbundschicht 172, einer zweiten Faserverbundschicht 174 und einer dazwischen angeordneten Schaumschicht 176, in die der Verzweigungsbereich 146 des Verankerungselements 140 eingebettet ist. In die Aufnahme 144 der Basis 142 der Verankerungsstruktur 140 ist ein zapfenförmiges Anbindungselement 178 eingesetzt, welches sich quer zur Ebene der Zweige 148a-f durch eine Öffnung 180 in der zweiten Faserverbundschicht 174 erstreckt und auf diese Weise eine Anschlussmöglichkeit für ein Krafteinleitungselement zur Verfügung stellt. Alternativ kann ein Krafteinleitungselement auch unmittelbar in die Aufnahme 144 eingesetzt werden. Das Anbindungselement 178 bzw. das Krafteinleitungselement können an der Aufnahme 144 beispielsweise stoffschlüssig mit der Basis 142 verbunden werden. Das Verankerungselement 140, das Anbindungselement 178 und/oder das Krafteinleitungselement können auch einteilig (integral) ausgebildet werden.

Wird auf das Anbindungselement 178 bzw. auf das Krafteinleitungselement eine Kraft ausgeübt, so wird diese auf die Basis 142 und dann auf die Verzweigungsstruktur 146 der Verankerungsstruktur 140 übertragen. Aufgrund der großen Oberfläche der Zweige 148a-f kann damit eine effektive Krafteinleitung in den relativ weichen Schaum der Schaumschicht 176 erreicht werden. Dies wird insbesondere dann begünstigt, wenn die Steifigkeit der Zweige 148a-d in distaler Richtung abnimmt.

Das Strukturbauteil 170 ist beispielsweise dadurch herstellbar, dass das zur Bildung der zweiten Faserverbundschicht 174 verwendete Faserverbundblech mit einer der Öffnung 180 entsprechenden Öffnung versehen wird und dann die Verankerungsstruktur 140 mit dem Anbindungselement 178 bzw. dem Krafteinleitungselement in diese Öffnung eingesetzt wird, so dass die Verzweigungsstruktur 146 in dem in Figur 7b dargestellten Hohlraum angeordnet ist. Beim Einspritzen des aufschäumenden Kunststoffs in den Hohlraum zur Herstellung der Schaumschicht 176 wird die Verzweigungsstruktur 146 dann mit dem Kunststoffschaum umspritzt, wobei der Kunststoffschaum insbesondere auch durch die in den Zweigen 146a-d vorgesehenen Öffnungen 158 dringt und so eine große Grenzfläche zwischen der Verzweigungsstruktur 146 und dem Schaum der Schaumschicht 176 erzeugt.

Mit einer solchen Verankerungsstruktur wie der Verankerungsstruktur 140 kann insbesondere eine Kraftübertragung von einer punktuellen Kraft oder einer Kraft, welche auf einer relativ zum Strukturbauteil kleinen Fläche wirkt, in einen Werkstoff mit relativ geringer Dichte, insbesondere in eine Schaumschicht, eingeleitet werden. Beispielsweise kann es sich bei dem Strukturbauteil, in das die Verankerungsstruktur integriert ist, um eine Heckklappe eines Kraftfahrzeugs handeln und ein Scharnier kann als Krafteinleitungselement über die Verankerungsstruktur mit dieser Heckklappe verbunden sein. Die von dem Scharnier ausgeübte, in Bezug auf die Größe der Heckklappe punktuelle Kraft wird über die Basis in die Verzweigungsstruktur der Verankerungsstruktur übertragen und auf diese Weise in den Schaum, z.B. Polyurethanschaum, der Schaumschicht des Bauteils eingeleitet.

Durch diese Aufspreizung des Kraftflusses auf mehrere Zweige der Verzweigungsstruktur wird eine gleichmäßige Einleitung der Kraft in die Schaumschicht ermöglicht. Mit der Verzweigungsstruktur bzw. einem Strukturbauteil mit integrierter Verzweigungsstruktur wird damit insbesondere die Aufgabe gelöst, eine höhere Spannung (= Kraft pro Fläche) in einen weichen Werkstoff einzuleiten, als es die Festigkeitswerte des weicheren Werkstoffes bei punktueller Befestigung erlauben würde.

Vorzugsweise nimmt der Querschnitt der Zweige von dem Krafteinleitungspunkt, d.h. von der Basis, bis hin zum distalen Ende eines Zweigs ab. Die Abnahme des Querschnitts der Zweige ist bevorzugt so angepasst, dass der lokale Querschnitt und damit die Festigkeit bzw. Steifigkeit der Zweige an die jeweils von dem entsprechenden distalen Zweigabschnitt zu übertragende Restkraft angepasst ist.

Bei dem zuvor beschriebenen Beispiel der Heckklappe, an der über die Verankerungsstruktur ein Scharnier befestigt ist, kann der Querschnitt der Zweige im Bereich der Basis beispielsweise zwischen 2 und 3 mm liegen und bis zum distalen Ende der Zweige auf 0,5 - 1 mm abnehmen.

Die Länge und Anzahl der Zweige ist vorzugsweise an die Haftfestigkeit oder Klebneigung des Schaumwerkstoffes zum Werkstoff der Zweige angepasst.

Die geometrischen Eigenschaften der Verankerungsstruktur, insbesondere die Anzahl, die Längen, die Richtungen und/oder die Querschnitte der Zweige, sind vorzugsweise an die für den geplanten Einsatzzweck der Verankerungsstruktur bzw. des Strukturbauteils mit integrierter Verankerungsstruktur zu erwartenden maximalen Kräfte angepasst. Auf diese Weise kann vermieden werden, dass die maximale Scherspannung überschritten wird, wodurch ansonsten die Verankerungsstruktur aus der Schaumschicht hinausgerissen werden könnte.

Die Zweige der Verankerungsstruktur können verschiedene Längen aufweisen und/oder die Zweige können unsymmetrisch um die Basis verteilt werden. Insbesondere können die Lägen und/oder die Richtungen der Zweige an die erwartete Richtung der Krafteinleitung durch das Krafteinleitungselement, beispielsweise eines Scharniers, und/oder an den zur Verfügung stehenden Bauraum angepasst werden.

Das Material der Verankerungsstruktur, insbesondere des Verzweigungsbereichs, sowie das Material der Schaumschicht sind vorzugsweise so aneinander angepasst, dass sie eine hohe Haftfestigkeit zueinander aufweisen. Besonders die Kombination aus auf Polycarbonat basierenden Werkstoffen für die Verankerungsstruktur mit Polyurethan-Schaumstoffen für die Schaumschicht hat sich hierfür als sehr geeignet erwiesen.

Die Zweige können quer zur Haupterstreckungsrichtung der Zweige jeweils Rippen bzw. Querstreben und Versteifungselemente aufweisen. Auf diese Weise wird kann der Formschluss zwischen den Zweigen und dem Schaumstoff weiter erhöht werden. Weiterhin kann der Verankerungsstruktur an sich eine höhere Eigensteifigkeit gegeben werden, so dass diese bei der Produktion einfacher hergestellt werden kann.

Teil der vorliegenden Offenbarung sind insbesondere auch folgende Ausführungsformen:
1. Mehrschichtiges Strukturbauteil
   - umfassend eine erste und eine zweite Faserverbundschicht und eine dazwischen angeordnete Schaumschicht aus aufgeschäumtem Kunststoff,
   - wobei die erste und die zweite Faserverbundschicht jeweils mindestens eine Faserlage aus einem Fasermaterial aufweisen, die in eine auf einem thermoplastischen Kunststoff basierende Matrix eingebettet ist,
      wobei dass das Strukturbauteil eine Verankerungsstruktur
      - mit einer Basis zur Anbindung an ein Krafteinleitungselement und
      - mit einer Verzweigungsstruktur, wobei die Verzweigungsstruktur mindestens drei sich von der Basis in verschiedene Richtungen erstreckenden Zweige umfasst,
      umfasst und wobei die Verzweigungsstruktur der Verankerungsstruktur in die Schaumschicht eingebettet ist.
2. Strukturbauteil nach Ausführungsform 1,
   dadurch gekennzeichnet,
   dass die Matrix der der ersten und/oder der zweiten Faserverbundschicht auf einem thermoplastischen Kunststoff basiert, wobei der thermoplastische Kunststoff ausgewählt ist aus Polycarbonat, Polyalkylacrylaten, Polyamid oder Mischungen dieser Thermoplaste mit beispielsweise Polyalkylenterephthalaten, Schlagzähmodifikatoren wie Acrylatkautschuken, ABS-Kautschuken und/oder Additiven wie Entformungsmitteln, Thermostabilisatoren oder UV-Absorbern.
3. Strukturbauteil nach Ausführungsform 1 oder 2,
   dadurch gekennzeichnet,
   dass die Faserlage der erste und/oder der zweiten Faserverbundschicht als unidirektionale Faserlage, als Gewebelage, als Wirrfaserlage oder als Kombination daraus ausgebildet ist.
4. Strukturbauteil nach einer der Ausführungsformen 1 bis 3,
   dadurch gekennzeichnet,
   dass das Fasermaterial der ersten und/oder der zweiten Faserverbundschicht Fasern aus einer oder mehreren der folgenden Faserarten umfasst: Glasfasern, Carbonfasern, Basaltfasern, Aramidfasern und metallische Fasern.
5. Strukturbauteil nach einer der Ausführungsformen 1 bis 4,
   dadurch gekennzeichnet,
   dass der Volumengehalt des Fasermaterials der ersten und/oder der zweiten Faserverbundschicht am Gesamtvolumen der jeweiligen Faserverbundschicht im Bereich von 30 bis 60 Vol.-%, bevorzugt im Bereich von 40 bis 55 Vol.-%, liegt.
6. Strukturbauteil nach einer der Ausführungsformen 1 bis 5,
   dadurch gekennzeichnet,
   dass die Erweichungstemperatur des aufgeschäumten Kunststoffs der Schaumschicht mindestens 130 °C, vorzugsweise mindestens 150 °C beträgt, insbesondere zwischen 150 °C und 200 °C ist.
7. Strukturbauteil nach einer der Ausführungsformen 1 bis 6,
   dadurch gekennzeichnet,
   dass der Kunststoff der Schaumschicht ein Duromer, bevorzugt ein Duromer auf Basis von Isocyanaten ist.
8. Strukturbauteil nach einer der Ausführungsformen 1 bis 7,
   dadurch gekennzeichnet,
   dass der aufgeschäumte Kunststoff der Schaumschicht eine Kernrohdichte nach DIN 53420 im Bereich 50 bis 600 kg/m³, bevorzugt 100 - 250 kg/m³ und besonders bevorzugt 140-200 kg/m³ aufweist.
9. Strukturbauteil nach einer der Ausführungsformen 1 bis 8,
   dadurch gekennzeichnet,
   dass die Schaumschicht mindestens zwei Teilbereiche mit voneinander verschiedenen Dicken aufweist.
10. Strukturbauteil nach einer der Ausführungsformen 1 bis 9,
   dadurch gekennzeichnet,
   dass die erste und/oder die zweite Faserverbundschicht eine Dicke im Bereich von 0,2 bis 6,0 mm, vorzugsweise von 0,4 bis 4,0 mm, insbesondere von 0,8 bis 1,5 mm aufweist.
11. Strukturbauteil nach einer der Ausführungsformen 1 bis 10,
   dadurch gekennzeichnet,
   dass die Schaumschicht eine maximale Dicke im Bereich von 2 bis 80 mm, vorzugsweise von 8 bis 25 mm aufweist.
12. Strukturbauteil nach einer der Ausführungsformen 1 bis 11,
   dadurch gekennzeichnet,
   dass auf einer der Schaumschicht abgewandten Seite der ersten und/oder der zweiten Faserverbundschicht eine Kunststofffolie aufgebracht ist, insbesondere eine Polycarbonatfolie.
13. Strukturbauteil nach einer der Ausführungsformen 1 bis 12,
   dadurch gekennzeichnet,
   dass auf einer der Schaumschicht abgewandten Seite der ersten und/oder der zweiten Faserverbundschicht oder auf einer darauf aufgebrachten Kunststofffolie eine Lackschicht aufgebracht ist.
14. Strukturbauteil nach einer der Ausführungsformen 1 bis 13,
   dadurch gekennzeichnet,
   dass die erste und die zweite Faserverbundschicht in mindestens einem Randbereich des Strukturbauteils unmittelbar aufeinanderliegen.
15. Strukturbauteil nach einer der Ausführungsformen 1 bis 14,
   dadurch gekennzeichnet,
   dass die erste und/oder die zweite Faserverbundschicht in mindestens einem Randbereich des Strukturbauteils gebördelt sind.
16. Strukturbauteil nach einer der Ausführungsformen 1 bis 15,
   dadurch gekennzeichnet,
   dass die erste oder die zweite Faserverbundschicht eine Aufnahme aufweist und sich die Verankerungsstruktur bis in die Aufnahme erstreckt.
17. Strukturbauteil nach einer der Ausführungsformen 1 bis 16,
   dadurch gekennzeichnet,
   dass das Strukturbauteil ein zumindest teilweise in die Schaumschicht eingebettetes funktionales Element umfasst, insbesondere ein optisches, elektrisches und/oder elektronisches Element.
18. Strukturbauteil nach einer der Ausführungsformen 1 bis 17,
   dadurch gekennzeichnet,
   dass die mindestens drei sich von der Basis in verschiedene Richtungen erstreckenden Zweige im Wesentlichen in einer Ebene liegen.
19. Strukturbauteil nach einer der Ausführungsformen 1 bis 18,
   dadurch gekennzeichnet,
   dass die Basis einen sich im Wesentlichen quer zur Ebene der Zweige erstreckenden Anbindungsbereich zur Anbindung an ein Krafteinleitungselement aufweist.
20. Strukturbauteil nach einer der Ausführungsformen 1 bis 19,
   dadurch gekennzeichnet,
   dass mindestens von einem Zweig der Verzweigungsstruktur mindestens ein weiterer Zweig abzweigt.
21. Strukturbauteil nach einer der Ausführungsformen 1 bis 20,
   dadurch gekennzeichnet,
   dass die Steifigkeit, insbesondere die Zug- und/oder Biegesteifigkeit, mindestens eines Zweigs der Verzweigungsstruktur in distaler Richtung abnimmt.
22. Strukturbauteil nach einer der Ausführungsformen 1 bis 21,
   dadurch gekennzeichnet,
   dass der Querschnitt mindestens eines Zweigs der Verzweigungsstruktur in distaler Richtung abnimmt.
23. Strukturbauteil nach einer der Ausführungsformen 1 bis 22,
   dadurch gekennzeichnet,
   dass mindestens ein Zweig der Verzweigungsstruktur eine Vielzahl von sich durch den Zweig hindurch erstreckenden Öffnungen aufweist.
24. Strukturbauteil nach einer der Ausführungsformen 1 bis 23,
   dadurch gekennzeichnet,
   dass mindestens ein Zweig der Verzweigungsstruktur verrippt ausgebildet ist.
25. Strukturbauteil nach einer der Ausführungsformen 1 bis 24,
   dadurch gekennzeichnet,
   dass die Verankerungsstruktur im Wesentlichen aus einem Kunststoff besteht.
26. Strukturbauteil nach einer der Ausführungsformen 1 bis 25,
   dadurch gekennzeichnet,
   dass an der Basis ein Krafteinleitungselement angebracht ist.
27. Verfahren zur Herstellung eines Strukturbauteils, insbesondere nach einer der Ausführungsformen 1 bis 26,
   - bei dem ein erstes und ein zweites Faserverbundblech bereitgestellt werden, wobei das erste und das zweite Faserverbundblech jeweils mindestens eine Faserlage aus einem Fasermaterial aufweisen, die in eine auf einem thermoplastischen Kunststoff basierende Matrix eingebettet ist,
   - bei dem das erste Faserverbundblech zu einem ersten Faserverbundhalbzeug und das zweite Faserverbundblech zu einem zweiten Faserverbundhalbzeug thermogeformt werden,
   - bei dem das erste und das zweite Faserverbundhalbzeug so in einem Schäumwerkzeug angeordnet werden, dass zwischen dem ersten und dem zweiten Faserverbundhalbzeug ein Hohlraum ausgebildet wird, und
   - bei dem der Hohlraum durch Einspritzen eines aufschäumenden Kunststoffs verschäumt wird.
28. Verfahren nach Ausführungsform 27,
   dadurch gekennzeichnet,
   dass eine Folie aus einem thermoplastischen Kunststoff beim Thermoformen des ersten oder des zweiten Faserverbundblechs so in einem beim Thermoformen verwendeten Umformwerkzeug angeordnet wird, dass es nach dem Thermoformen stoffschlüssig mit dem entsprechenden Faserverbundhalbzeug verbunden ist.
29. Verfahren nach Ausführungsform 28,
   dadurch gekennzeichnet,
   dass die Folie vor dem Anordnen in dem Umformwerkzeug thermisch vorgeformt wird.
30. Verfahren nach einer der Ausführungsformen 27 bis 29,
   dadurch gekennzeichnet,
   dass ein funktionales Element oder eine Verankerungsstruktur, insbesondere eine Verankerungsstruktur nach einer der Ausführungsformen 19 bis 28, so in einer in das erste oder das zweite Faserverbundhalbzeug eingebrachte Aufnahme angeordnet wird, dass ein Teil des funktionalen Elements oder der Verankerungsstruktur in den Hohlraum hineinragt und dort beim Verschäumen des Hohlraums vom aufgeschäumten Kunststoff eingebettet wird.
31. Verwendung eines Strukturbauteils nach einer der Ausführungsformen 1 bis 26 zur Herstellung eines Fahrzeugkarosseriebauteils, insbesondere einer Heckklappe, einer Motorhaube oder eines Dachelements.
32. Verwendung eines Strukturbauteils nach einer der Ausführungsformen 1 bis 26 zur Herstellung einer Bauteilgruppe, insbesondere für eine Fahrzeugkarosserie, umfassend das Strukturbauteil und ein an der Verankerungsstruktur des Strukturbauteils befestigtes Krafteinleitungselement, insbesondere ein Scharnier.

## Patentansprüche

1. Mehrschichtiges Strukturbauteil (84, 110, 120, 170)
- umfassend eine erste und eine zweite Faserverbundschicht (102, 104, 122, 124, 172, 174) und eine dazwischen angeordnete Schaumschicht (106, 126, 176) aus aufgeschäumtem Kunststoff,
- wobei die erste und die zweite Faserverbundschicht (102, 104, 122, 124, 172, 174) jeweils mindestens eine Faserlage (4, 16, 18, 24) aus einem Fasermaterial aufweisen, **dadurch gekennzeichnet, dass** das Fasermaterial in eine auf einem thermoplastischen Kunststoff basierende Matrix (8, 20) eingebettet ist, und das Strukturbauteil (84, 110, 120, 170) eine Verankerungsstruktur (140)
- mit einer Basis (142) zur Anbindung an ein Krafteinleitungselement und
- mit einer Verzweigungsstruktur (146), wobei die Verzweigungsstruktur (146) mindestens drei sich von der Basis (142) in verschiedene Richtungen erstreckenden Zweige (148a-f) umfasst,
umfasst,
wobei die Verzweigungsstruktur (154) der Verankerungsstruktur (140) in die Schaumschicht (106, 126, 176) eingebettet ist.

2. Strukturbauteil nach Anspruch 1,
**dadurch gekennzeichnet,**
**dass** die Matrix (8, 20) der ersten und/oder der zweiten Faserverbundschicht (102, 104, 122, 124, 172, 174) auf einem thermoplastischen Kunststoff basiert.

3. Strukturbauteil nach Anspruch 1 oder 2,
**dadurch gekennzeichnet,**
**dass** die Faserlage (4, 16, 18, 24) der ersten und/oder der zweiten Faserverbundschicht (102, 104, 122, 124, 172, 174) als unidirektionale Faserlage, als Gewebelage, als Wirrfaserlage oder als Kombination daraus ausgebildet ist.

4. Strukturbauteil nach einem der Ansprüche 1 bis 3,
**dadurch gekennzeichnet,**
**dass** das Fasermaterial der ersten und/oder der zweiten Faserverbundschicht (102, 104, 122, 124, 172, 174) Fasern aus einer oder mehreren der folgenden Faserarten umfasst: Glasfasern, Carbonfasern, Basaltfasern, Aramidfasern, metallische Fasern.

5. Strukturbauteil nach einem der Ansprüche 1 bis 4,
**dadurch gekennzeichnet,**
**dass** der Volumengehalt des Fasermaterials der ersten und/oder der zweiten Faserverbundschicht (102, 104, 122, 124, 172, 174) am Gesamtvolumen der jeweiligen Faserverbundschicht (102, 104, 122, 124, 172, 174) im Bereich von 30 bis 60 Vol.-%, bevorzugt im Bereich von 40 bis 55 Vol.-%, liegt.

6. Strukturbauteil nach einem der vorhergehenden Ansprüche,
**dadurch gekennzeichnet,**
**dass** die erste oder die zweite Faserverbundschicht (102, 104, 122, 124, 172, 174) eine Aufnahme, insbesondere eine Öffnung (180), aufweist und sich die Verankerungsstruktur (140) bis in die Aufnahme erstreckt.

7. Strukturbauteil nach einem der vorhergehenden Ansprüche,
**dadurch gekennzeichnet,**
**dass** das Strukturbauteil (84, 110, 120, 170) ein zumindest teilweise in der Schaumschicht (106, 126, 176) eingebettetes funktionales Element (130) umfasst, insbesondere ein optisches, elektrisches und/oder elektronisches Element.

8. Strukturbauteil nach einem der vorhergehenden Ansprüche,
**dadurch gekennzeichnet,**
**dass** die mindestens drei sich von der Basis (142) in verschiedene Richtungen erstreckenden Zweige (148a-f) der Verzweigungsstruktur (146) im Wesentlichen in einer Ebene liegen.

9. Strukturbauteil nach einem der vorhergehenden Ansprüche,
**dadurch gekennzeichnet,**
**dass** die Basis (142) einen sich im Wesentlichen quer zur Ebene der Zweige (148a-f) erstreckenden Anbindungsbereich zur Anbindung an ein Krafteinleitungselement aufweist.

10. Strukturbauteil nach einem der vorhergehenden Ansprüche,
**dadurch gekennzeichnet,**
**dass** mindestens von einem Zweig (148a-f) der Verzweigungsstruktur (146) mindestens ein weiterer Zweig abzweigt.

11. Strukturbauteil nach einem der vorhergehenden Ansprüche,
**dadurch gekennzeichnet,**
**dass** die Steifigkeit, insbesondere die Zug- und/oder Biegesteifigkeit, mindestens eines Zweigs (148a-f) der Verzweigungsstruktur (146) in distaler Richtung abnimmt.

12. Strukturbauteil nach einem der vorhergehenden Ansprüche,
**dadurch gekennzeichnet,**
**dass** mindestens ein Zweig (148a-f) der Verzweigungsstruktur (146) verrippt ausgebildet ist.

13. Strukturbauteil nach einem der vorhergehenden Ansprüche,
**dadurch gekennzeichnet,**
**dass** an der Basis (142) ein Krafteinleitungselement angebracht ist.

14. Verfahren zur Herstellung eines Strukturbauteils (84, 110, 120, 170) nach einem der Ansprüche 1 bis 13,
- bei dem ein erstes und ein zweites Faserverbundblech (2, 12, 48, 52) bereitgestellt werden, wobei das erste und das zweite Faserverbundblech (2, 12, 48, 52) jeweils mindestens eine Faserlage (4, 16, 18, 24) aus einem Fasermaterial aufweisen, die in eine auf einem thermoplastischen Kunststoff basierende Matrix (8, 20) eingebettet ist,
- bei dem das erste Faserverbundblech (2, 12, 48, 52) zu einem ersten Faserverbundhalbzeug (64, 86, 88) und das zweite Faserverbundblech (2, 12, 48, 52) zu einem zweiten Faserverbundhalbzeug (64, 86, 88) thermogeformt werden,
- bei dem das erste und das zweite Faserverbundhalbzeug (64, 86, 88) so in einem Schäumwerkzeug (90) angeordnet werden, dass zwischen dem ersten und dem zweiten Faserverbundhalbzeug (64, 86, 88) ein Hohlraum (96) ausgebildet wird, der durch einen polymeren, bevorzugt duromeren, Schaumstoff, bevorzugt durch Aufschäumen in situ, ausgefüllt wird, wobei
- eine Verankerungsstruktur (140) so in einer in das erste oder das zweite Faserverbundhalbzeug (64, 86, 88) eingebrachten Aufnahme (128, 152) angeordnet wird, dass die Verankerungsstruktur (140) in den Hohlraum (96) hineinragt und dort beim Verschäumen des Hohlraums (96) vom aufgeschäumten Kunststoff eingebettet wird.

15. Verfahren nach Anspruch 14,
**dadurch gekennzeichnet,**
**dass** eine Folie (30, 40, 72, 74, 76) aus einem thermoplastischen Kunststoff beim Thermoformen des ersten oder des zweiten Faserverbundblechs (2, 12, 48, 52) so in einem beim Thermoformen verwendeten Umformwerkzeug (58) angeordnet wird, dass es nach dem Thermoformen stoffschlüssig mit dem entsprechenden Faserverbundhalbzeug (64, 86, 88) verbunden ist.

16. Verfahren nach Anspruch 14 oder 15,
**dadurch gekennzeichnet,**
**dass** ein funktionales Element (130) so in eine in das erste oder das zweite Faserverbundhalbzeug (64, 86, 88) eingebrachte Aufnahme (128, 152) angeordnet wird, dass ein Teil des funktionalen Elements (130) in den Hohlraum (96) hineinragt und dort beim Verschäumen des Hohlraums (96) vom aufgeschäumten Kunststoff eingebettet wird.

17. Verwendung eines Strukturbauteils (84, 110, 120, 170) nach einem der Ansprüche 1 bis 13 zur Herstellung eines Fahrzeugkarosseriebauteils, insbesondere einer Heckklappe, einer Motorhaube oder eines Dachelements.

18. Verwendung eines Strukturbauteils (170) nach einem der Ansprüche 1 bis 13 zur Herstellung einer Bauteilgruppe, insbesondere für eine Fahrzeugkarosserie, umfassend das Strukturbauteil (170) und ein an der Verankerungsstruktur des Strukturbauteils (170) befestigtes Krafteinleitungselement, insbesondere ein Scharnier.

## Claims

1. Multilayer structural component (84, 110, 120, 170)
- comprising a first and a second fiber-composite layer (102, 104, 122, 124, 172, 174) and, arranged therebetween, a foam layer (106, 126, 176) made of foamed plastic,
- where the first and the second fiber-composite layer (102, 104, 122, 124, 172, 174) respectively have at least one fiber ply (4, 16, 18, 24) which is made of a fiber material, **characterized in that** the fiber material has been embedded into a matrix (8, 20) based on a thermoplastic,
and the structural component (84, 110, 120, 170) comprises an anchoring structure (140)
- with a base (142) for linkage to a force-introducing element, and
- with a branching structure (146), where the branching structure (146) comprises at least three branches (148a-f) extending from the base (142) in various directions,
where the branching structure (154) of the anchoring structure (140) has been embedded into the foam layer (106, 126, 176).

2. Structural component according to Claim 1, **characterized in that**
the matrix (8, 20) of the first and/or of the second fiber-composite layer (102, 104, 122, 124, 172, 174) is based on a thermoplastic.

3. Structural component according to Claim 1 or 2, **characterized in that**
the fiber ply (4, 16, 18, 24) of the first and/or of the second fiber-composite layer (102, 104, 122, 124, 172, 174) takes the form of unidirectional fiber ply, of woven-fabric ply, of random-fiber ply, or of combinations thereof.

4. Structural component according to any of Claims 1 to 3,
**characterized in that**
the fiber material of the first and/or of the second fiber-composite layer (102, 104, 122, 124, 172, 174) comprises fibers made of one or more of the following fiber types: glass fibers, carbon fibers, basalt fibers, aramid fibers, metallic fibers.

5. Structural component according to any of Claims 1 to 4,
**characterized in that**
the content by volume of the fiber material of the first and/or of the second fiber-composite layer (102, 104, 122, 124, 172, 174), based on the total volume of the respective fiber-composite layer (102, 104, 122, 124, 172, 174) is in the range from 30 to 60% by volume, preferably in the range from 40 to 55% by volume.

6. Structural component according to any of the preceding claims,
**characterized in that**
the first or the second fiber-composite layer (102, 104, 122, 124, 172, 174) has an accommodation space, in particular an aperture (180), and the anchoring structure (140) extends into the accommodation space.

7. Structural component according to any of the preceding claims,
**characterized in that**
the structural component (84, 110, 120, 170) comprises a functional element (130) at least to some extent embedded in the foam layer (106, 126, 176), in particular an optical, electrical and/or electronic element.

8. Structural component according to any of the preceding claims,
**characterized in that**,
in the branching structure (146), the at least three branches (148a-f) extending from the base (142) in various directions are in essence in one plane.

9. Structural component according to any of the preceding claims,
**characterized in that**
the base (142) has, for linkage to a force-introducing element, a linkage region extending in essence perpendicular to the plane of the branches (148a-f).

10. Structural component according to any of the preceding claims,
**characterized in that**,
at least from one branch (148a-f) of the branching structure (146), at least one further branch extends.

11. Structural component according to any of the preceding claims,
**characterized in that**
the stiffness, in particular the tensile and/or flexural stiffness, of at least one branch (148a-f) of the branching structure (146) decreases in the distal direction.

12. Structural component according to any of the preceding claims,
**characterized in that**
at least one branch (148a-f) of the branching structure (146) is of ribbed design.

13. Structural component according to any of the preceding claims,
**characterized in that**
at the base (142) a force-introducing element has been attached.

14. Process for the production of a structural component (84, 110, 120, 170) according to any of Claims 1 to 13,
- where a first and a second fiber-composite sheet (2, 12, 48, 52) are provided, where the first and the second fiber-composite sheet (2, 12, 48, 52) respectively have at least one fiber ply (4, 16, 18, 24) which is made of a fiber material and which has been embedded into a matrix (8, 20) based on a thermoplastic,
- where the first fiber-composite sheet (2, 12, 48, 52) is thermoformed to give a first semifinished fiber-composite product (64, 86, 88), and the second fiber-composite sheet (2, 12, 48, 52) is thermoformed to give a second semifinished fiber-composite product (64, 86, 88),
- where the first and the second semifinished fiber-composite product (64, 86, 88) are arranged in a foaming mold (90) in such a way that, between the first and the second semifinished fiber-composite product (64, 86, 88), a cavity (96) is formed, and is filled by a polymeric, preferably thermoset, foam, preferably by foaming in situ, where
- an anchoring structure (140) is arranged in an accommodation space (128, 152) introduced into the first or the second semifinished fiber-composite product (64, 86, 88) in such a way that the anchoring structure (140) protrudes into the cavity (96) and, when foam is introduced into the cavity (96), is embedded there by the foamed plastic.

15. Process according to Claim 14,
**characterized in that**,
during the thermoforming of the first or of the second fiber-composite sheet (2, 12, 48, 52), a foil (30, 40, 72, 74, 76) made of a thermoplastic is arranged in such a way in a forming mold (58) used during the thermoforming process that, after the thermoforming process, it has bonded coherently to the corresponding semifinished fiber-composite product (64, 86, 88).

16. Process according to Claim 14 or 15,
**characterized in that**
a functional element (130) is arranged in such a way in an accommodation space (128, 152) introduced into the first or the second semifinished fiber-composite product (64, 86, 88) that a part of the functional element (130) protrudes into the cavity (96) and, when foam is introduced into the cavity (96), is embedded there by the foamed plastic.

17. Use of a structural component (84, 110, 120, 170) according to any of Claims 1 to 13 for the production of a vehicle bodywork component, in particular of a tailgate, an engine hood, or a roof element.

18. Use of a structural component (170) according to any of Claims 1 to 13 for the production of a component group, in particular for vehicle bodywork, comprising the structural component (170) and a force-introducing element secured at the anchoring structure of the structural component (170), said element being in particular a hinge.

## Revendications

1. Composant structurel multicouche (84, 110, 120, 170)
- comprenant une première et une seconde couche composite fibreuse (102, 104, 122, 124, 172, 174) et une couche de mousse (106, 126, 176) disposée entre les deux et constituée de plastique moussé,
- la première et seconde couche composite fibreuse (102, 104, 122, 124, 172, 174) comprenant chacune au moins une couche de fibres (4, 16, 18, 24) constituée d'une matière fibreuse,
**caractérisé en ce que** la matière fibreuse est incorporée dans une matrice (8, 20) à base d'un plastique thermoplastique,
et le composant structurel (84, 110, 120, 170) comprend une structure d'ancrage (140)
- comprenant une base (142) destinée à être reliée à un élément d'introduction de forces, et
- comprenant une structure de ramification (146), la structure de ramification (146) comprenant au moins trois branches (148a-f) qui s'étendent à partir de la base (142) dans des directions différentes,
la structure de ramification (154) de la structure d'ancrage (140) étant incorporée dans la couche de mousse (106, 126, 176).

2. Composant structurel selon la revendication 1, **caractérisé en ce que** la matrice (8, 20) de la première et/ou de la seconde couche composite fibreuse (102, 104, 122, 124, 172, 174) est à base d'un plastique thermoplastique.

3. Composant structurel selon la revendication 1 ou 2, **caractérisé en ce que** la couche de fibres (4, 16, 18, 24) de la première et/ou de la seconde couche composite fibreuse (102, 104, 122, 124, 172, 174) est configurée sous la forme d'une couche de fibres unidirectionnelle, sous la forme d'une couche de tissu, sous la forme d'une couche de fibres irrégulières ou sous la forme d'une combinaison d'entre elles.

4. Composant structurel selon l'une quelconque des revendications 1 à 3, **caractérisé en ce que** la matière fibreuse de la première et/ou de la seconde couche composite fibreuse (102, 104, 122, 124, 172, 174) comprend des fibres d'un ou de plusieurs des types de fibres suivants : les fibres de verre, les fibres de carbone, les fibres de basalte, les fibres d'aramide, les fibres métalliques.

5. Composant structurel selon l'une quelconque des revendications 1 à 4, **caractérisé en ce que** la teneur en volume de la matière fibreuse de la première et/ou de la seconde couche composite fibreuse (102, 104, 122, 124, 172, 174) par rapport au volume total de la couche composite fibreuse respective (102, 104, 122, 124, 172, 174) se situe dans la plage allant de 30 à 60 % en volume, de préférence dans la plage allant de 40 à 55 % en volume.

6. Composant structurel selon l'une quelconque des revendications précédentes, **caractérisé en ce que** la première ou la seconde couche composite fibreuse (102, 104, 122, 124, 172, 174) comprend une entrée, notamment une ouverture (180), et la structure d'ancrage (140) s'étend jusque dans l'entrée.

7. Composant structurel selon l'une quelconque des revendications précédentes, **caractérisé en ce que** le composant structurel (84, 110, 120, 170) comprend un élément fonctionnel (130) au moins partiellement incorporé dans la couche de mousse (106, 126, 176), notamment un élément optique, électrique et/ou électronique.

8. Composant structurel selon l'une quelconque des revendications précédentes, **caractérisé en ce que** lesdites au moins trois branches (148a-f) de la structure de ramification (146) qui s'étendent à partir de la base (142) dans des directions différentes se situent essentiellement dans un plan.

9. Composant structurel selon l'une quelconque des revendications précédentes, **caractérisé en ce que** la base (142) comprend une zone de liaison qui s'étend essentiellement perpendiculairement au plan des branches (148a-f) pour la liaison à un élément d'introduction de forces.

10. Composant structurel selon l'une quelconque des revendications précédentes, **caractérisé en ce qu'**au moins une autre branche dérive d'au moins une branche (148a-f) de la structure de ramification (146).

11. Composant structurel selon l'une quelconque des revendications précédentes, **caractérisé en ce que** la rigidité, notamment la rigidité en traction et/ou en flexion, d'au moins une branche (148a-f) de la structure de ramification (146) diminue dans la direction distale.

12. Composant structurel selon l'une quelconque des revendications précédentes, **caractérisé en ce qu'**au moins une branche (148a-f) de la structure de ramification (146) est configurée sous forme nervurée.

13. Composant structurel selon l'une quelconque des revendications précédentes, **caractérisé en ce qu'**un élément d'introduction de forces est disposé sur la base (142).

14. Procédé de fabrication d'un composant structurel (84, 110, 120, 170) selon l'une quelconque des revendications 1 à 13,
- selon lequel une première et une seconde plaque composite fibreuse (2, 12, 48, 52) sont préparées, la première et la seconde plaque composite fibreuse (2, 12, 48, 52) comprenant chacune au moins une couche de fibres (4, 16, 18, 24) en une matière fibreuse, qui est incorporée dans une matrice (8, 20) à base d'un plastique thermoplastique,
- selon lequel la première plaque composite fibreuse (2, 12, 48, 52) est thermoformée en un premier produit composite fibreux semi-fini (64, 86, 88) et la seconde plaque composite fibreuse (2, 12, 48, 52) est thermoformée en un second produit composite fibreux semi-fini (64, 86, 88),
- selon lequel le premier et le second produit composite fibreux semi-fini (64, 86, 88) sont disposés dans un outil de moussage (90) afin de former une cavité (96) entre le premier et le second produit composite fibreux semi-fini (64, 86, 88), qui est remplie par une mousse polymère, de préférence duromère, de préférence par moussage in situ,
- une structure d'ancrage (140) étant agencée dans une entrée (128, 152) disposée dans le premier ou le second produit composite fibreux semi-fini (64, 86, 88) de sorte que la structure d'ancrage (140) avance dans la cavité (96) et y soit incorporée lors du moussage de la cavité (96) par le plastique moussé.

15. Procédé selon la revendication 14, **caractérisé en ce qu'**un film (30, 40, 72, 74, 76) en un plastique thermoplastique est agencé lors du thermoformage de la première ou de la seconde plaque composite fibreuse (2, 12, 48, 52) dans un outil de façonnage (58) utilisé lors du thermoformage de sorte qu'il soit relié par accouplement de matière avec le produit composite fibreux semi-fini (64, 86, 88) correspondant après le thermoformage.

16. Procédé selon la revendication 14 ou 15, **caractérisé en ce qu'**un élément fonctionnel (130) est agencé dans une entrée (128, 152) disposée dans le premier ou le second produit composite fibreux semi-fini (64, 86, 88) de sorte qu'une partie de l'élément fonctionnel (130) avance dans la cavité (96) et y soit incorporée lors du moussage de la cavité (96) par le plastique moussé.

17. Utilisation d'un composant structurel (84, 110, 120, 170) selon l'une quelconque des revendications 1 à 13 pour la fabrication d'un composant de carrosserie automobile, notamment d'un hayon, d'un capot ou d'un élément de toit.

18. Utilisation d'un composant structurel (170) selon l'une quelconque des revendications 1 à 13 pour la fabrication d'un groupe de composants, notamment pour une carrosserie automobile, comprenant le composant structurel (170) et un élément d'introduction de forces fixé à la structure d'ancrage du composant structurel (170), notamment une charnière.
